# EUROPEAN PATENT APPLICATION

(11) **EP 4 580 245 A1**
(43) Date of publication of application: **02.07.2025**
(21) Application number: 23856744.0
(22) Date of filing: 28.08.2023
(51) Int. Cl.: H04W 24/10

(54) **MEASUREMENT REPORTING METHOD AND APPARATUS, AND TERMINAL AND NETWORK DEVICE**

(30) Priority: 26.08.2022 CN 202211034398
(71) Applicant: Datang Mobile Communications Equipment Co., Ltd., Beijing 100085 (CN)
(72) Inventor: ZHANG, Bufang, Beijing 100085 (CN); XU, Meng, Beijing 100085 (CN)
(74) Representative: Maiwald GmbH
(86) International application number: PCT/CN2023/115244
(87) International publication number: WO 2024/041659

(57) **Abstract**

The present disclosure provides a measurement reporting method, device, UE and network device, and relates to the field of communication technology. The method includes: obtaining, at a user equipment (UE), a layer 1 measurement result; if the layer 1 measurement result meets a preset condition, sending, by the UE, the layer 1 measurement result to the network device; wherein the preset condition includes a trigger condition of event trigger configuration information.

## Description

### CROSS-REFERENCE TO RELATED APPLICATION

The present application is filed based on and claims the priority of Chinese Application No. 202211034398.1 filed on August 26, 2022, entitled "Measurement reporting method, device, UE and network equipment", the disclosure of which are incorporated in their entireties by reference herein.

### TECHNICAL FIELD

The present disclosure relates to the field of communication technologies, and in particular, to a measurement reporting method and device, UE and network device.

### BACKGROUND

For layer 1 (L1) or layer 2 (L2) mobility support, the network device pre-configures corresponding candidate cell set and its configuration information to user equipment (UE), and then the UE needs to perform measurements on cells in the candidate cell set and report corresponding measurement results to the network device. The network device makes cell mobility decision based on the measurement results reported by the UE, and triggers cell management execution by issuing L1 or L2 commands. If the network device makes a cell mobility decision based on a layer 3 (L3) measurement result, the delay of the entire process will increase. If the network device makes a cell mobility decision based on the current L1 beam measurement result, since the L1 beam measurement result is generally unstable and instantaneous occlusion and other factors may cause large deviations, there is a problem of poor reliability, which is prone to cause the ping-pong phenomenon.

### SUMMARY

The present disclosure provides a measurement reporting method, device, UE and network equipment, which can solve the problems of large delay and poor reliability when the network equipment side performs cell mobility decision.

One embodiment of the present disclosure provides a measurement reporting method, including:
obtaining, at a user equipment (UE), a layer 1 measurement result;
if the layer 1 measurement result meets a preset condition, sending, by the UE, the layer 1 measurement result to the network device; wherein the preset condition includes a trigger condition of event trigger configuration information.

Optionally, the event trigger configuration information is configured by the network device or predefined by a protocol.

Optionally, the method further includes:
receiving, by the UE, layer 1 measurement configuration information sent by the network device;
wherein the layer 1 measurement configuration information carries the event trigger configuration information; or the layer 1 measurement configuration information is associated with first measurement reporting identifier information or first measurement identifier information, and the first measurement reporting identifier information or first measurement identifier information is associated with the event trigger configuration information.

Optionally, the method further includes:
receiving, by the UE, an RRC message and/or MAC CE sent by the network device; wherein the RRC message and/or MAC CE carries the event trigger configuration information.

Optionally, the event trigger configuration information includes at least one of the following:
beam identifier;
measurement reporting identifier;
reference signal resource configuration identifier;
a cell identifier of a cell associated with the beam identifier;
frequency information of a cell associated with the beam identifier;
TCI identifier associated with the beam identifier;
beam measurement parameter;
RRM measurement parameter;
resource configuration information of resources corresponding to reported layer 1 measurement result;
measurement configuration information for RRM measurement;
first indication information used to indicate that RRM measurement is determined based on layer 3 measurement configuration information;
second indication information used to indicate that the RRM measurement is determined based on a measurement object identifier of layer 3 measurement configuration information;
a first threshold of the RRM measurement value;
a first fluctuation threshold of an RRM measurement value;
third indication information used to indicate a reference signal type to which the first threshold and/or the first fluctuation threshold is applicable;
fourth indication information used to indicate a measurement parameter corresponding to the first threshold and/or the first fluctuation threshold;
a first duration of the first threshold or the first fluctuation threshold;
a cell number N1 for reporting RRM measurements, where N1 is a positive integer;
fifth indication information used to indicate that the UE can only report a measurement result of a cell with the largest number of beams whose RRM measurement value is greater than the second threshold, or to indicate that the UE can only report measurement results of N2 cells with the largest number of beams whose RRM measurement value is greater than the second threshold, where N2 is a positive integer;
a third threshold of the layer 1 beam measurement value;
a second fluctuation threshold of the layer 1 beam measurement value;
sixth indication information used to indicate a reference signal type to which the third threshold or the second fluctuation threshold is applicable;
seventh indication information used to indicate a measurement parameter corresponding to the third threshold or the second fluctuation threshold;
a second duration of the third threshold or the second fluctuation threshold;
a beam number N3 for reporting layer 1 beam measurements, N3 is a positive integer.

Optionally, the RRM measurement value includes at least one of the following:
measurement value after layer 1 filtering and beam averaging;
measurement value after layer 1 filtering and layer 3 beam filtering;
measurement value after layer 1 filtering, beam averaging and layer 3 cell filtering.

Optionally, the layer 1 beam measurement value includes at least one of the following:
beam measurement value after only layer 1 filtering;
measurement value after layer 1 filtering and beam measurement number averaging.

Optionally, the trigger condition of the event trigger configuration information includes at least one of the following:
a measurement value of the RRM measurement is greater than the first threshold;
a measurement value of the RRM measurement is always greater than the first threshold within the first duration;
a measurement value of the RRM measurement is greater than a measurement result of a serving cell;
a measurement value of an RRM measurement is always greater than a measurement result of a serving cell within the first duration;
a measurement value of the RRM measurement belongs to measurement values of the first (N1+1) RRM measurements after measurement values of all RRM measurements are sorted by the measurement values;
a measurement value of an RRM measurement belong to measurement values of the first (N1+1) RRM measurements after measurement values of all RRM measurements are sorted by the measurement values within the first duration;
a measurement value of an RRM measurement is a beam measurement value of a first cell, and the first cell is a cell with the largest number of beams greater than the second threshold;
a measurement value of the RRM measurement is a beam measurement value of a second cell, and the second cell is a cell whose number of beams greater than the second threshold ranks in the top N2+1;
a change amount of the measurement value of the RRM measurement is less than the first fluctuation threshold;
a change amount of the measurement value of the RRM measurement is always less than the first fluctuation threshold within the first duration;
a measurement value of the layer 1 beam measurement is greater than the third threshold;
a measurement value of the layer 1 beam measurement is always greater than the third threshold within the second duration;
a measurement value of the layer 1 beam measurement is the best among all the measurement values of the layer 1 beam measurement;
a measurement value of the layer 1 beam measurement is optimal among all the measurement values of the layer 1 beam measurement within the second duration;
a measurement value of the layer 1 beam measurement belongs to the first (N3+1) layer 1 beam measurement values among all layer 1 beam measurement values sorted by measurement values;
a measurement value of the layer 1 beam measurement belongs to the first (N3+1) layer 1 beam measurement values among all layer 1 beam measurement values sorted by measurement values, within the second duration;
a change amount of the measurement value of the layer 1 beam measurement is less than the second fluctuation threshold;
measurement values of the layer 1 beam measurement are all less than the second fluctuation threshold within the second duration.

Optionally, the layer 1 measurement result is carried by at least one of the following:
PUSCH;
PUCCH;
MAC CE.

Optionally, the layer 1 measurement result includes at least one of the following:
beam identifier;
eighth indication information used to indicate that the layer 1 measurement result meets the trigger condition of the event trigger configuration information;
TCI identifier;
resource set identifier;
resource configuration identifier;
layer 1 beam measurement value;
layer 1 beam measurement parameter corresponding to the layer 1 beam measurement value;
RRM measurement value;
RRM measurement parameter corresponding to the RRM measurement value.

Optionally, after sending, by the UE, the layer 1 measurement result, to the network device, the method further includes:
receiving, by the UE, a first command sent by the network device; where the first command is a layer 1 command or a layer 2 command;
performing, by the UE, cell management according to the first command; wherein the cell management includes at least one of the following:
   cell handover;
   primary service cell change;
   primary service cell addition;
   PSCell change;
   PSCell addition;
   Secondary Cell (Scell) change;
   Scell addition.

One embodiment of the present disclosure provides a measurement reporting method, including:
receiving, by a network device, a layer 1 measurement result sent by a user equipment (UE); wherein the layer 1 measurement result meets a preset condition, and the preset condition includes a trigger condition of event trigger configuration information.

Optionally, the event trigger configuration information is configured by the network device or predefined by a protocol.

Optionally, the method further includes:
sending layer 1 measurement configuration information to the UE;
wherein the layer 1 measurement configuration information carries the event trigger configuration information; or the layer 1 measurement configuration information is associated with first measurement reporting identifier information or first measurement identifier information, and the first measurement reporting identifier information or first measurement identifier information is associated with the event trigger configuration information.

Optionally, the method further includes:
sending an RRC message and/or MAC CE to the UE; wherein the RRC message and/or MAC CE carries the event trigger configuration information.

Optionally, the event trigger configuration information includes at least one of the following:
beam identifier;
measurement reporting identifier;
reference signal resource configuration identifier;
a cell identifier of a cell associated with the beam identifier;
frequency information of a cell associated with the beam identifier;
TCI identifier associated with the beam identifier;
beam measurement parameter;
RRM measurement parameter;
resource configuration information of resources corresponding to reported layer 1 measurement result;
measurement configuration information for RRM measurement;
first indication information used to indicate that RRM measurement is determined based on layer 3 measurement configuration information;
second indication information used to indicate that the RRM measurement is determined based on a measurement object identifier of layer 3 measurement configuration information;
a first threshold of the RRM measurement value;
a first fluctuation threshold of an RRM measurement value;
third indication information used to indicate a reference signal type to which the first threshold and/or the first fluctuation threshold is applicable;
fourth indication information used to indicate a measurement parameter corresponding to the first threshold and/or the first fluctuation threshold;
a first duration of the first threshold or the first fluctuation threshold;
a cell number N1 for reporting RRM measurements, where N1 is a positive integer;
fifth indication information used to indicate that the UE can only report a measurement result of a cell with the largest number of beams whose RRM measurement value is greater than the second threshold, or to indicate that the UE can only report measurement results of N2 cells with the largest number of beams whose RRM measurement value is greater than the second threshold, where N2 is a positive integer;
a third threshold of the layer 1 beam measurement value;
a second fluctuation threshold of the layer 1 beam measurement value;
sixth indication information used to indicate a reference signal type to which the third threshold or the second fluctuation threshold is applicable;
seventh indication information used to indicate a measurement parameter corresponding to the third threshold or the second fluctuation threshold;
a second duration of the third threshold or the second fluctuation threshold;
a beam number N3 for reporting layer 1 beam measurements, N3 is a positive integer.

Optionally, the RRM measurement value of the RRM measurement parameter includes at least one of the following:
measurement value after layer 1 filtering and beam averaging;
measurement value after layer 1 filtering and layer 3 beam filtering;
measurement value after layer 1 filtering, beam averaging and layer 3 cell filtering.

Optionally, the layer 1 beam measurement value of the layer 1 beam measurement parameter includes at least one of the following:
beam measurement value after only layer 1 filtering;
measurement value after layer 1 filtering and beam measurement number averaging.

Optionally, the trigger condition of the event trigger configuration information includes at least one of the following:
a measurement value of the RRM measurement is greater than the first threshold;
a measurement value of the RRM measurement is always greater than the first threshold within the first duration;
a measurement value of the RRM measurement is greater than a measurement result of a serving cell;
a measurement value of an RRM measurement is always greater than a measurement result of a serving cell within the first duration;
a measurement value of the RRM measurement belongs to measurement values of the first (N1+1) RRM measurements after measurement values of all RRM measurements are sorted by the measurement values;
a measurement value of an RRM measurement belong to measurement values of the first (N1+1) RRM measurements after measurement values of all RRM measurements are sorted by the measurement values within the first duration;
a measurement value of an RRM measurement is a beam measurement value of a first cell, and the first cell is a cell with the largest number of beams greater than the second threshold;
a measurement value of the RRM measurement is a beam measurement value of a second cell, and the second cell is a cell whose number of beams greater than the second threshold ranks in the top N2+1;
a change amount of the measurement value of the RRM measurement is less than the first fluctuation threshold;
a change amount of the measurement value of the RRM measurement is always less than the first fluctuation threshold within the first duration;
a measurement value of the layer 1 beam measurement is greater than the third threshold;
a measurement value of the layer 1 beam measurement is always greater than the third threshold within the second duration;
a measurement value of the layer 1 beam measurement is the best among all the measurement values of the layer 1 beam measurement;
a measurement value of the layer 1 beam measurement is optimal among all the measurement values of the layer 1 beam measurement within the second duration;
a measurement value of the layer 1 beam measurement belongs to the first (N3+1) layer 1 beam measurement values among all layer 1 beam measurement values sorted by measurement values;
a measurement value of the layer 1 beam measurement belongs to the first (N3+1) layer 1 beam measurement values among all layer 1 beam measurement values sorted by measurement values, within the second duration;
a change amount of the measurement value of the layer 1 beam measurement is less than the second fluctuation threshold;
measurement values of the layer 1 beam measurement are all less than the second fluctuation threshold within the second duration.

Optionally, the layer 1 measurement result is carried by at least one of the following:
PUSCH;
PUCCH;
MAC CE.

Optionally, the layer 1 measurement result includes at least one of the following:
beam identifier;
eighth indication information used to indicate that the layer 1 measurement result meets the trigger condition of the event trigger configuration information;
TCI identifier;
resource set identifier;
resource configuration identifier;
layer 1 beam measurement value;
layer 1 beam measurement parameter corresponding to the layer 1 beam measurement value;
RRM measurement value;
RRM measurement parameter corresponding to the RRM measurement value.

Optionally, after receiving, by the network device, the layer 1 measurement result sent by the UE, the method further includes:
sending, by the network device, a first command to the UE according to the layer 1 measurement result; wherein the first command is used to perform cell management, and the first command is a layer 1 command or a layer 2 command;
wherein the cell management includes at least one of the following:
   cell handover;
   primary service cell change;
   primary service cell addition;
   PSCell change;
   PSCell addition;
   Secondary Cell (Scell) change;
   Scell addition.

One, embodiment of the present disclosure provides a measurement reporting device, including: a memory, a transceiver, and a processor;
wherein the memory is used to store a computer program; the transceiver is used to send and receive data under the control of the processor; the processor is used to read the computer program in the memory and perform the following operations:
obtaining, at a user equipment (UE), a layer 1 measurement result;
if the layer 1 measurement result meets a preset condition, sending, by the UE, the layer 1 measurement result to the network device; wherein the preset condition includes a trigger condition of event trigger configuration information.

Optionally, the event trigger configuration information is configured by the network device or predefined by a protocol.

Optionally, the processor is used to read the computer program in the memory and perform the following operations:
receiving layer 1 measurement configuration information sent by the network device;
wherein the layer 1 measurement configuration information carries the event trigger configuration information; or the layer 1 measurement configuration information is associated with first measurement reporting identifier information or first measurement identifier information, and the first measurement reporting identifier information or first measurement identifier information is associated with the event trigger configuration information.

Optionally, the processor is used to read the computer program in the memory and perform the following operations:
receiving an RRC message and/or MAC CE sent by the network device; wherein the RRC message and/or MAC CE carries the event trigger configuration information.

Optionally, the event trigger configuration information includes at least one of the following:
beam identifier;
measurement reporting identifier;
reference signal resource configuration identifier;
a cell identifier of a cell associated with the beam identifier;
frequency information of a cell associated with the beam identifier;
TCI identifier associated with the beam identifier;
beam measurement parameter;
RRM measurement parameter;
resource configuration information of resources corresponding to reported layer 1 measurement result;
measurement configuration information for RRM measurement;
first indication information used to indicate that RRM measurement is determined based on layer 3 measurement configuration information;
second indication information used to indicate that the RRM measurement is determined based on a measurement object identifier of layer 3 measurement configuration information;
a first threshold of the RRM measurement value;
a first fluctuation threshold of an RRM measurement value;
third indication information used to indicate a reference signal type to which the first threshold and/or the first fluctuation threshold is applicable;
fourth indication information used to indicate a measurement parameter corresponding to the first threshold and/or the first fluctuation threshold;
a first duration of the first threshold or the first fluctuation threshold;
a cell number N1 for reporting RRM measurements, where N1 is a positive integer;
fifth indication information used to indicate that the UE can only report a measurement result of a cell with the largest number of beams whose RRM measurement value is greater than the second threshold, or to indicate that the UE can only report measurement results of N2 cells with the largest number of beams whose RRM measurement value is greater than the second threshold, where N2 is a positive integer;
a third threshold of the layer 1 beam measurement value;
a second fluctuation threshold of the layer 1 beam measurement value;
sixth indication information used to indicate a reference signal type to which the third threshold or the second fluctuation threshold is applicable;
seventh indication information used to indicate a measurement parameter corresponding to the third threshold or the second fluctuation threshold;
a second duration of the third threshold or the second fluctuation threshold;
a beam number N3 for reporting layer 1 beam measurements, N3 is a positive integer.

Optionally, the trigger condition of the event trigger configuration information includes at least one of the following:
a measurement value of the RRM measurement is greater than the first threshold;
a measurement value of the RRM measurement is always greater than the first threshold within the first duration;
a measurement value of the RRM measurement is greater than a measurement result of a serving cell;
a measurement value of an RRM measurement is always greater than a measurement result of a serving cell within the first duration;
a measurement value of the RRM measurement belongs to measurement values of the first (N1+1) RRM measurements after measurement values of all RRM measurements are sorted by the measurement values;
a measurement value of an RRM measurement belong to measurement values of the first (N1+1) RRM measurements after measurement values of all RRM measurements are sorted by the measurement values within the first duration;
a measurement value of an RRM measurement is a beam measurement value of a first cell, and the first cell is a cell with the largest number of beams greater than the second threshold;
a measurement value of the RRM measurement is a beam measurement value of a second cell, and the second cell is a cell whose number of beams greater than the second threshold ranks in the top N2+1;
a change amount of the measurement value of the RRM measurement is less than the first fluctuation threshold;
a change amount of the measurement value of the RRM measurement is always less than the first fluctuation threshold within the first duration;
a measurement value of the layer 1 beam measurement is greater than the third threshold;
a measurement value of the layer 1 beam measurement is always greater than the third threshold within the second duration;
a measurement value of the layer 1 beam measurement is the best among all the measurement values of the layer 1 beam measurement;
a measurement value of the layer 1 beam measurement is optimal among all the measurement values of the layer 1 beam measurement within the second duration;
a measurement value of the layer 1 beam measurement belongs to the first (N3+1) layer 1 beam measurement values among all layer 1 beam measurement values sorted by measurement values;
a measurement value of the layer 1 beam measurement belongs to the first (N3+1) layer 1 beam measurement values among all layer 1 beam measurement values sorted by measurement values, within the second duration;
a change amount of the measurement value of the layer 1 beam measurement is less than the second fluctuation threshold;
measurement values of the layer 1 beam measurement are all less than the second fluctuation threshold within the second duration.

Optionally, the layer 1 measurement result includes at least one of the following:
beam identifier;
eighth indication information used to indicate that the layer 1 measurement result meets the trigger condition of the event trigger configuration information;
TCI identifier;
resource set identifier;
resource configuration identifier;
layer 1 beam measurement value;
layer 1 beam measurement parameter corresponding to the layer 1 beam measurement value;
RRM measurement value;
RRM measurement parameter corresponding to the RRM measurement value.

One embodiment of the present disclosure provides a user equipment (UE), including:
an obtaining unit used to obtain a layer 1 measurement result;
a sending unit used to, if the layer 1 measurement result meets a preset condition, send the layer 1 measurement result to the network device; wherein the preset condition includes a trigger condition of event trigger configuration information.

Optionally, the event trigger configuration information is configured by the network device or predefined by a protocol.

Optionally, the UE further includes:
a first receiving unit used to receive layer 1 measurement configuration information sent by the network device;
wherein the layer 1 measurement configuration information carries the event trigger configuration information; or the layer 1 measurement configuration information is associated with first measurement reporting identifier information or first measurement identifier information, and the first measurement reporting identifier information or first measurement identifier information is associated with the event trigger configuration information.

Optionally, the UE further includes:
a second receiving unit used to receive an RRC message and/or MAC CE sent by the network device; wherein the RRC message and/or MAC CE carries the event trigger configuration information.

Optionally, the event trigger configuration information includes at least one of the following:
beam identifier;
measurement reporting identifier;
reference signal resource configuration identifier;
a cell identifier of a cell associated with the beam identifier;
frequency information of a cell associated with the beam identifier;
TCI identifier associated with the beam identifier;
beam measurement parameter;
RRM measurement parameter;
resource configuration information of resources corresponding to reported layer 1 measurement result;
measurement configuration information for RRM measurement;
first indication information used to indicate that RRM measurement is determined based on layer 3 measurement configuration information;
second indication information used to indicate that the RRM measurement is determined based on a measurement object identifier of layer 3 measurement configuration information;
a first threshold of the RRM measurement value;
a first fluctuation threshold of an RRM measurement value;
third indication information used to indicate a reference signal type to which the first threshold and/or the first fluctuation threshold is applicable;
fourth indication information used to indicate a measurement parameter corresponding to the first threshold and/or the first fluctuation threshold;
a first duration of the first threshold or the first fluctuation threshold;
a cell number N1 for reporting RRM measurements, where N1 is a positive integer;
fifth indication information used to indicate that the UE can only report a measurement result of a cell with the largest number of beams whose RRM measurement value is greater than the second threshold, or to indicate that the UE can only report measurement results of N2 cells with the largest number of beams whose RRM measurement value is greater than the second threshold, where N2 is a positive integer;
a third threshold of the layer 1 beam measurement value;
a second fluctuation threshold of the layer 1 beam measurement value;
sixth indication information used to indicate a reference signal type to which the third threshold or the second fluctuation threshold is applicable;
seventh indication information used to indicate a measurement parameter corresponding to the third threshold or the second fluctuation threshold;
a second duration of the third threshold or the second fluctuation threshold;
a beam number N3 for reporting layer 1 beam measurements, N3 is a positive integer.

Optionally, the trigger condition of the event trigger configuration information includes at least one of the following:
a measurement value of the RRM measurement is greater than the first threshold;
a measurement value of the RRM measurement is always greater than the first threshold within the first duration;
a measurement value of the RRM measurement is greater than a measurement result of a serving cell;
a measurement value of an RRM measurement is always greater than a measurement result of a serving cell within the first duration;
a measurement value of the RRM measurement belongs to measurement values of the first (N1+1) RRM measurements after measurement values of all RRM measurements are sorted by the measurement values;
a measurement value of an RRM measurement belong to measurement values of the first (N1+1) RRM measurements after measurement values of all RRM measurements are sorted by the measurement values within the first duration;
a measurement value of an RRM measurement is a beam measurement value of a first cell, and the first cell is a cell with the largest number of beams greater than the second threshold;
a measurement value of the RRM measurement is a beam measurement value of a second cell, and the second cell is a cell whose number of beams greater than the second threshold ranks in the top N2+1;
a change amount of the measurement value of the RRM measurement is less than the first fluctuation threshold;
a change amount of the measurement value of the RRM measurement is always less than the first fluctuation threshold within the first duration;
a measurement value of the layer 1 beam measurement is greater than the third threshold;
a measurement value of the layer 1 beam measurement is always greater than the third threshold within the second duration;
a measurement value of the layer 1 beam measurement is the best among all the measurement values of the layer 1 beam measurement;
a measurement value of the layer 1 beam measurement is optimal among all the measurement values of the layer 1 beam measurement within the second duration;
a measurement value of the layer 1 beam measurement belongs to the first (N3+1) layer 1 beam measurement values among all layer 1 beam measurement values sorted by measurement values;
a measurement value of the layer 1 beam measurement belongs to the first (N3+1) layer 1 beam measurement values among all layer 1 beam measurement values sorted by measurement values, within the second duration;
a change amount of the measurement value of the layer 1 beam measurement is less than the second fluctuation threshold;
measurement values of the layer 1 beam measurement are all less than the second fluctuation threshold within the second duration.

Optionally, the layer 1 measurement result includes at least one of the following:
beam identifier;
eighth indication information used to indicate that the layer 1 measurement result meets the trigger condition of the event trigger configuration information;
TCI identifier;
resource set identifier;
resource configuration identifier;
layer 1 beam measurement value;
layer 1 beam measurement parameter corresponding to the layer 1 beam measurement value;
RRM measurement value;
RRM measurement parameter corresponding to the RRM measurement value.

One embodiment of the present disclosure provides a measurement reporting device, including: a memory, a transceiver, and a processor;
wherein the memory is used to store a computer program; the transceiver is used to send and receive data under the control of the processor; the processor is used to read the computer program in the memory and perform the following operations:
receiving a layer 1 measurement result sent by a user equipment (UE); wherein the layer 1 measurement result meets a preset condition, and the preset condition includes a trigger condition of event trigger configuration information.

Optionally, the event trigger configuration information is configured by the network device or predefined by a protocol.

Optionally, the processor is used to read the computer program in the memory and perform the following operations:
sending layer 1 measurement configuration information to the UE;
wherein the layer 1 measurement configuration information carries the event trigger configuration information; or the layer 1 measurement configuration information is associated with first measurement reporting identifier information or first measurement identifier information, and the first measurement reporting identifier information or first measurement identifier information is associated with the event trigger configuration information.

Optionally, the processor is used to read the computer program in the memory and perform the following operations:
sending an RRC message and/or MAC CE to the UE; wherein the RRC message and/or MAC CE carries the event trigger configuration information.

Optionally, the event trigger configuration information includes at least one of the following:
beam identifier;
measurement reporting identifier;
reference signal resource configuration identifier;
a cell identifier of a cell associated with the beam identifier;
frequency information of a cell associated with the beam identifier;
TCI identifier associated with the beam identifier;
beam measurement parameter;
RRM measurement parameter;
resource configuration information of resources corresponding to reported layer 1 measurement result;
measurement configuration information for RRM measurement;
first indication information used to indicate that RRM measurement is determined based on layer 3 measurement configuration information;
second indication information used to indicate that the RRM measurement is determined based on a measurement object identifier of layer 3 measurement configuration information;
a first threshold of the RRM measurement value;
a first fluctuation threshold of an RRM measurement value;
third indication information used to indicate a reference signal type to which the first threshold and/or the first fluctuation threshold is applicable;
fourth indication information used to indicate a measurement parameter corresponding to the first threshold and/or the first fluctuation threshold;
a first duration of the first threshold or the first fluctuation threshold;
a cell number N1 for reporting RRM measurements, where N1 is a positive integer;
fifth indication information used to indicate that the UE can only report a measurement result of a cell with the largest number of beams whose RRM measurement value is greater than the second threshold, or to indicate that the UE can only report measurement results of N2 cells with the largest number of beams whose RRM measurement value is greater than the second threshold, where N2 is a positive integer;
a third threshold of the layer 1 beam measurement value;
a second fluctuation threshold of the layer 1 beam measurement value;
sixth indication information used to indicate a reference signal type to which the third threshold or the second fluctuation threshold is applicable;
seventh indication information used to indicate a measurement parameter corresponding to the third threshold or the second fluctuation threshold;
a second duration of the third threshold or the second fluctuation threshold;
a beam number N3 for reporting layer 1 beam measurements, N3 is a positive integer.

Optionally, the trigger condition of the event trigger configuration information includes at least one of the following:
a measurement value of the RRM measurement is greater than the first threshold;
a measurement value of the RRM measurement is always greater than the first threshold within the first duration;
a measurement value of the RRM measurement is greater than a measurement result of a serving cell;
a measurement value of an RRM measurement is always greater than a measurement result of a serving cell within the first duration;
a measurement value of the RRM measurement belongs to measurement values of the first (N1+1) RRM measurements after measurement values of all RRM measurements are sorted by the measurement values;
a measurement value of an RRM measurement belong to measurement values of the first (N1+1) RRM measurements after measurement values of all RRM measurements are sorted by the measurement values within the first duration;
a measurement value of an RRM measurement is a beam measurement value of a first cell, and the first cell is a cell with the largest number of beams greater than the second threshold;
a measurement value of the RRM measurement is a beam measurement value of a second cell, and the second cell is a cell whose number of beams greater than the second threshold ranks in the top N2+1;
a change amount of the measurement value of the RRM measurement is less than the first fluctuation threshold;
a change amount of the measurement value of the RRM measurement is always less than the first fluctuation threshold within the first duration;
a measurement value of the layer 1 beam measurement is greater than the third threshold;
a measurement value of the layer 1 beam measurement is always greater than the third threshold within the second duration;
a measurement value of the layer 1 beam measurement is the best among all the measurement values of the layer 1 beam measurement;
a measurement value of the layer 1 beam measurement is optimal among all the measurement values of the layer 1 beam measurement within the second duration;
a measurement value of the layer 1 beam measurement belongs to the first (N3+1) layer 1 beam measurement values among all layer 1 beam measurement values sorted by measurement values;
a measurement value of the layer 1 beam measurement belongs to the first (N3+1) layer 1 beam measurement values among all layer 1 beam measurement values sorted by measurement values, within the second duration;
a change amount of the measurement value of the layer 1 beam measurement is less than the second fluctuation threshold;
measurement values of the layer 1 beam measurement are all less than the second fluctuation threshold within the second duration.

Optionally, the layer 1 measurement result includes at least one of the following:
beam identifier;
eighth indication information used to indicate that the layer 1 measurement result meets the trigger condition of the event trigger configuration information;
TCI identifier;
resource set identifier;
resource configuration identifier;
layer 1 beam measurement value;
layer 1 beam measurement parameter corresponding to the layer 1 beam measurement value;
RRM measurement value;
RRM measurement parameter corresponding to the RRM measurement value.

One embodiment of the present disclosure provides a measurement reporting device, including:
a receiving unit used to receive a layer 1 measurement result; wherein the layer 1 measurement result meets a preset condition, and the preset condition includes a trigger condition of event trigger configuration information.

One embodiment of the present disclosure provides a processor-readable storage medium, including a computer program stored thereon; wherein the computer program is used to cause a processor to perform steps of the measurement reporting method on the UE, or the computer program is used to cause the processor to perform the steps of the measurement reporting method on the network side.

The beneficial effect of the above technical solution of the present disclosure is as follows. The UE obtains the layer 1 measurement result, and the UE sends the layer 1 measurement result to the network device when the layer 1 measurement result meet the trigger condition of the event trigger configuration information, which is beneficial to improve the reliability of the layer 1 measurement result reported by the UE to the network device, thereby solving the ping-pong phenomenon caused by the poor reliability of the layer 1 measurement result, and reducing the delay of the network device in making a cell mobility decision.

### BRIEF DESCRIPTION OF THE DRAWINGS

FIG. 1 is a flow chart of a measurement reporting method on a UE according to an embodiment of the present disclosure;
FIG. 2 is a flow chart of a measurement reporting method on a network device according to an embodiment of the present disclosure;
FIG. 3 is a block diagram of a UE according to an embodiment of the present disclosure;
FIG. 4 is a block diagram of a measurement reporting device on the UE-side according to an embodiment of the present disclosure;
FIG. 5 is a block diagram of a network device according to an embodiment of the present disclosure; and
FIG. 6 is a block diagram of a measurement reporting device on the network device according to an embodiment of the present disclosure.

### DETAILED DESCRIPTION

In order to make the technical problems, the technical solutions and the advantages of the present disclosure more apparent, the present disclosure will be described hereinafter in conjunction with the drawings and embodiments. In the following descriptions, to facilitate understanding embodiments of the present disclosure, specific configurations and specific details of components are provided. Thus, persons having ordinary skill in the art should understand that, various changes and modifications may be made to the embodiments described here, without departing from scope and spirit of the present disclosure. In addition, for clarity and simplicity, descriptions about known functions and constructions are omitted.

It is to be understood that, the phrase "one embodiment" or "an embodiment" as used throughout the specification means that a particular feature, structure, or characteristic relating to an embodiment is included in at least one embodiment of the present disclosure. Thus, "in one embodiment" or "in an embodiment" as used throughout the specification does not necessarily refer to the same embodiment. In addition, these specific features, structures, or characteristics may be combined in any suitable manner in one or more embodiments.

In various embodiments of the present disclosure, it is to be understood that, the sequence numbers of the following processes do not imply the order of execution. The order of execution of each process should be determined by its function and internal logic, which should not constitute any limitation to the implementation processes of the embodiments of the application.

Additionally, the terms "system" and "network" are often used interchangeably herein.

The technical solutions provided in the embodiments of the present disclosure may be applicable to various systems, especially the fifth generation communication (5G) system. For example, applicable systems may be global system of mobile communication (GSM) system, code division multiple access (CDMA) system, wideband code division multiple access (WCDMA) general packet wireless service (GPRS) system, long term evolution (LTE) system, LTE frequency division duplex (FDD) system, LTE time division duplex (TDD) system, long term evolution advanced (LTE-A) system, universal mobile telecommunication system (UMTS), worldwide interoperability for microwave access (WiMAX) system, 5G new radio (NR) system, etc. Each of the various systems includes a user equipment and a network device. The system may further include a core network part, such as an evolved packet system (EPS), a 5G system (5GS).

Each of the network device and the UE can use one or more antennas for multi input multi output (MIMO) transmission between the network device and the UE. The MIMO transmission may be single user MIMO (SU-MIMO), or multiple user MIMO (MU-MIMO). According to forms and numbers of antenna combinations, MIMO transmission may be two dimensional-MIMO (2D-MIMO), three dimensional-MIMO (3D-MIMO), full dimensional-MIMO (FD-MIMO), or massive-MIMO, or diversity transmission, precoding transmission, or beamforming transmission.

The terms "and/or" in the embodiments of the present disclosure are used to describe association relationship between associated objects, and indicate that there may be three relationships, for example, A and/or B means there are three situations, i.e., there is A alone, there are both of A and B, or, there is B alone. The character "/" generally means that relationship between associated objects before and after the character "/" is "or".

The term "plurality" in the embodiments of the present disclosure means two or more, and other quantifiers are similar.

The technical solutions in the embodiments of the present disclosure will be described hereinafter in a clear and complete manner in conjunction with the accompanying drawings of the embodiments of the present disclosure. Obviously, the following embodiments are merely a part of, rather than all of, the embodiments of the present disclosure, and based on these embodiments, a person skilled in the art may obtain the other embodiments, which also fall within the scope of the present disclosure.

The following is an introduction to related technologies for cell handover.

### (1) L3 switching

Cell handover triggered by L3 includes real-time handover and conditional handover.

Real-time handover, cell addition or change: when the network device decides to switch the UE from a current serving cell to another cell, the network device sends an RRC reconfiguration message to the UE, which carries configuration information required for the UE to access a target cell. After the UE receives the RRC reconfiguration message sent by the network device, the UE uses configuration information of the target cell included in the reconfiguration message to initiate a random access process on the target cell side for synchronization, and feeds back an RRC reconfiguration completion message to the target cell side to indicate, to the network device, that the UE has successfully accessed the target cell. Generally, the handover decision made by the network device is based on the L3 measurement result reported by the UE, where the L3 measurement result is measured by the UE according to measurement configuration configured at an RRC layer.

Conditional handover, cell addition or change: the network device pre-configures multiple target cells for the UE, that is, configuration information and execution conditions of the target cells are sent to the UE in advance. When the UE receives the configuration information of the target cell, the UE will not immediately perform handover or PSCell change or PSCell addition like traditional handover, primary SCG Cell change (PSCell change) or PSCell addition, but will save the received configuration and measure and evaluate the configured candidate cells; until there is a cell that meets the execution conditions, the UE will execute the stored reconfiguration message corresponding to the cell, perform the corresponding handover or PSCell change or PSCell addition procedure, that is, completing downlink synchronization and triggerring a random access procedure to access a target primary cell (PCell) or PSCell, and feedbacking corresponding reconfiguration completion message to the network device. The measurement evaluation performed by the UE is also based on the measurement configuration configured at the RRC layer.

### (2) Beam measurement and reporting

Currently, L1 beam measurement and reporting are configured by associating reporting configuration with different measurement resource configurations. Reference signals used for measurement include Synchronization Signal Block (SSB) and Channel State Information Reference Signal (CSI-RS). The reporting methods include periodic, semi-persistent, and aperiodic reporting methods. The reporting can be considered transparent to higher layers and is mainly carried through PUCCH or PUSCH.

In order to achieve faster cell mobility management, it is considered to trigger cell management execution by issuing L1 or L2 commands. If the network device makes a cell mobility decision based on a layer 3 measurement result, the delay of the entire process will increase. If the network device makes a cell mobility decision based on the current L1 beam measurement result, since the L1 beam measurement result is generally unstable and instantaneous occlusion and other factors may cause large deviations, there is a problem of poor reliability, which is prone to cause the ping-pong phenomenon.

The present disclosure provides a measurement reporting method and device, UE and network device, which can solve the problems of large delay and poor reliability when the network device performs cell mobility decision. The method, device, UE and network device are conceived based on the same application. Since the method, device, UE and network device have similar principles for solving problems, implementation of the method, device, UE and network device can refer to each other, and the repeated parts will not be repeated.

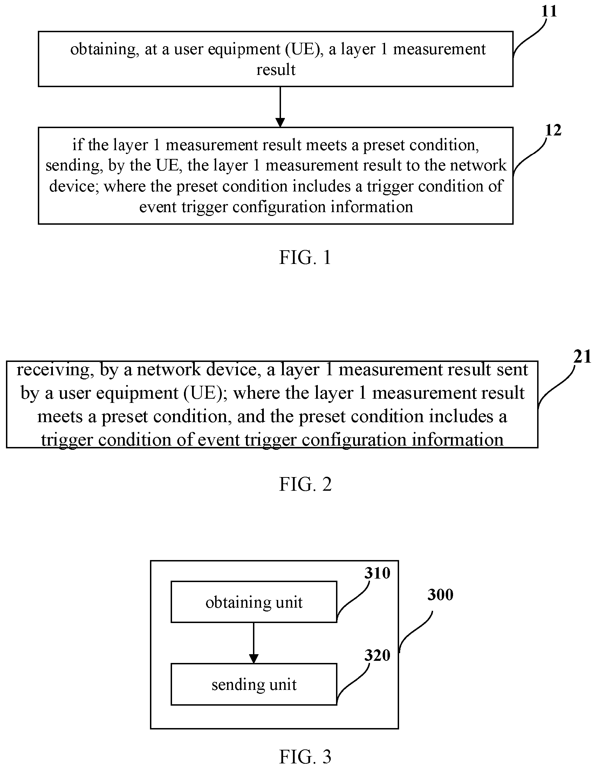

As shown in FIG. 1, one embodiment of the present disclosure provides a measurement reporting method, which includes the following steps.

Step 11: obtaining, at a user equipment (UE), a layer 1 measurement result.

Optionally, the layer 1 measurement result obtained by the UE includes but is not limited to at least one of the following: beam identifier, TCI identifier, resource set identifier, resource configuration identifier, layer 1 beam measurement value, layer 1 beam measurement parameter corresponding to the layer 1 beam measurement value, RRM measurement value (or, it may also be called layer 3 cell-level measurement value), and RRM measurement parameter corresponding to the RRM measurement value (or, it may also be called layer 3 cell-level measurement parameter).

For example, the layer 1 beam measurement parameter may include but is not limited to at least one of the following: signal-to-noise and interference ratio (SINR), reference signal received power (RSRP), reference signal received quality (RSRQ). When the layer 1 beam measurement parameter includes SINR, the layer 1 beam measurement value includes a measurement value of SINR; when the layer 1 beam measurement parameter includes RSRP, the layer 1 beam measurement value includes a measurement value of RSRP; when the layer 1 beam measurement parameter includes RSRQ, the layer 1 beam measurement value includes a measurement value of RSRQ.

The RRM measurement parameter (or may also be called layer 3 cell-level measurement parameter) may include but is not limited to: SINR, RSRP, and RSRQ. When the RRM measurement parameter includes SINR, then the RRM measurement value (or it can also be called the layer 3 cell-level measurement value) includes a measurement value of SINR; when the RRM measurement parameter includes RSRP, then the RRM measurement value includes a measurement value of RSRP; when the RRM measurement parameter includes RSRQ, then the RRM measurement value includes a measurement value of RSRQ.

Step 12: if the layer 1 measurement result meets a preset condition, sending, by the UE, the layer 1 measurement result to the network device; where the preset condition includes a trigger condition of event trigger configuration information.

Optionally, the event trigger configuration information is configured by the network device or predefined by a protocol. For example, the event trigger configuration information is configured by the network device in a way including that: the network device sends the event trigger configuration information to the UE.

Optionally, the layer 1 measurement result sent by the UE to the network device may include but are not limited to at least one of the following: beam identifier, TCI identifier, resource set identifier, resource configuration identifier, layer 1 beam measurement value, layer 1 beam measurement parameter corresponding to the layer 1 beam measurement value, RRM measurement value, RRM measurement parameter corresponding to the RRM measurement value, and eighth indication information. The eighth indication information is used to indicate that the layer 1 measurement result meets the trigger condition of the event trigger configuration information.

For example, when the network device configures the event trigger configuration information for the UE, if the UE reports a layer 1 measurement result to the network device, for instance, the layer 1 measurement result includes the layer 1 beam measurement value and its corresponding layer 1 beam measurement parameter, and/or, an RRM measurement value and its corresponding RRM measurement parameter, then the network device can learn that the layer 1 measurement result meets the trigger condition of the event trigger configuration information. In addition, the layer 1 measurement result may also carry eighth indication information used to indicate that the layer 1 measurement result meets the trigger condition of the event trigger configuration information. That is, the UE can notify the network device in an explicit indication manner that the layer 1 measurement result meets the trigger condition of the event trigger configuration information, so that the network device makes a cell mobility decision based on the layer 1 measurement result.

For another example, when the network device and the UE determine the event trigger configuration information based on the protocol predefinition, if the UE reports the layer 1 measurement result to the network device, for instance, the layer 1 measurement result includes a layer 1 beam measurement value and its corresponding layer 1 beam measurement parameter, and/or, an RRM measurement value and its corresponding RRM measurement parameter, then the network device can also learn based on the protocol predefinition that the layer 1 measurement result meets the trigger condition of the event trigger configuration information. In addition, the layer 1 measurement result may also carry eighth indication information used to indicate that the layer 1 measurement result meets the trigger condition of the event trigger configuration information. That is, the UE can notify the network device in an explicit indication manner that the layer 1 measurement result meets the trigger condition of the event trigger configuration information, so that the network device makes a cell mobility decision based on the layer 1 measurement result.

For another example, when the network device configures the event trigger configuration information for the UE or the network device and the UE determine the event trigger configuration information based on the protocol predefinition, the layer 1 measurement result reported by the UE to the network device may include eighth indication information used to indicate that the layer 1 measurement result meets the trigger condition of the event trigger configuration information, and the layer 1 measurement result does not include a layer 1 beam measurement value and its corresponding layer 1 beam measurement parameter, and/or an RRM measurement value and its corresponding layer 1 beam measurement parameter. That is, the UE can notify the network device in an explicit indication manner that the layer 1 measurement result meets the trigger condition of the event trigger configuration information, without having to report measurement values, so that the network device makes a cell mobility decision based on the layer 1 measurement result.

Optionally, the layer 1 measurement result reported by the UE to the network device is carried through at least one of the following: PUSCH, PUCCH, and MAC CE.

In the above solution, the UE obtains the layer 1 measurement result, and the UE sends the layer 1 measurement result to the network device when the layer 1 measurement result meet the trigger condition of the event trigger configuration information, which is beneficial to improve the reliability of the layer 1 measurement result reported by the UE to the network device, thereby solving the ping-pong phenomenon caused by the poor reliability of the layer 1 measurement result, and reducing the delay of the network device in making a cell mobility decision.

Optionally, the measurement reporting method further includes:
receiving, by the UE, layer 1 measurement configuration information sent by the network device.

The layer 1 measurement configuration information carries the event trigger configuration information; or the layer 1 measurement configuration information is associated with first measurement reporting identifier information or first measurement identifier information, and the first measurement reporting identifier information or first measurement identifier information is associated with the event trigger configuration information.

For example, when the event trigger configuration information is configured by the network device, the event trigger configuration information may be carried in the layer 1 measurement configuration information configured by the network device for the UE. The UE can perform layer 1 measurement (such as beam measurement and/or RRM measurement) based on the layer 1 measurement configuration information, to obtain the corresponding layer 1 measurement result, and reports the layer 1 measurement result to the network device when the layer 1 measurement result meet the trigger condition of the event trigger configuration information.

Optionally, the layer 1 measurement configuration information may be measurement configuration information used for layer 1 measurement in the related art, such as extending event trigger configuration information in the measurement configuration information, or the first measurement reporting identifier information or the first measurement identifier information. The first measurement reporting identifier information or the first measurement identifier information is associated with the event trigger configuration information. For example, the first measurement reporting identifier information may be a measurement reporting identifier or measurement identifier of RRM measurement configuration information.

Optionally, the layer 1 measurement configuration information may also be new layer 1 measurement configuration information compared to the related art, and the event trigger configuration information may be carried in the new layer 1 measurement configuration information.

Optionally, the measurement reporting method further includes:
receiving, by the UE, the RRC message and/or MAC CE sent by the network device; where the RRC message and/or MAC CE carries the event trigger configuration information.

For example, when the event trigger configuration information is configured by the network device, the event trigger configuration information may be carried in the RRC message and/or MAC CE sent by the network device to the UE. Alternatively, the RRC message and/or MAC CE sent by the network device to the UE carries the layer 1 measurement configuration information, and the layer 1 measurement configuration information includes the event trigger configuration information, where the layer 1 measurement configuration information may be measurement configuration information used for layer 1 measurement in the related art, or may be new layer 1 measurement configuration information compared to the related art.

Optionally, the event trigger configuration information includes at least one of the following:
beam identifier;
measurement reporting identifier;
reference signal resource configuration identifier;
a cell identifier of a cell associated with the beam identifier;
frequency information of a cell associated with the beam identifier;
TCI identifier associated with the beam identifier;
beam measurement parameter; for example, the beam measurement parameter may include but is not limited to at least one of the following: SINR, RSRP, RSRQ, that is, the event trigger configuration information needs to configure a beam measurement parameter to be compared for beam measurement result reporting event trigger;
RRM measurement parameter; for example, the RRM measurement parameter includes but is not limited to at least one of the following: SINR, RSRP, RSRQ, that is, the event trigger configuration information needs to configure an RRM measurement parameter to be compared for RRM measurement result reporting event trigger.
resource configuration information of resources corresponding to reported layer 1 measurement result;
measurement configuration information for RRM measurement;
first indication information used to indicate that RRM measurement is determined based on layer 3 measurement configuration information;
second indication information used to indicate that the RRM measurement is determined based on a measurement object identifier of layer 3 measurement configuration information;
a first threshold of the RRM measurement value; for example, when the RRM measurement parameter to be compared for the RRM measurement result reporting event trigger is configured as RSRP in the event trigger configuration information, the first threshold is an RSRP measurement value threshold for triggering the RRM measurement result reporting; or, when the RRM measurement parameter to be compared for the RRM measurement result reporting event trigger is configured as RSRQ in the event trigger configuration information, the first threshold is an RSRQ measurement value threshold for triggering the RRM measurement result reporting; or, when the RRM measurement parameter to be compared for the RRM measurement result reporting event trigger is configured as SINR in the event triggering configuration information, the first threshold is an SINR measurement value threshold for triggering the RRM measurement result reporting; in addition, the RRM measurement parameter corresponding to the first threshold may also be indicated by the following fourth indication information; optionally, the first threshold may be an absolute threshold, or a difference between a measurement value of a candidate cell measured by the UE and a measurement value of a serving cell, etc., which is not limited thereto;
a first fluctuation threshold of an RRM measurement value; for example, when an RRM measurement parameter to be compared for the RRM measurement result reporting event trigger is configured as RSRP in the event trigger configuration information, the first fluctuation threshold is an RSRP measurement value fluctuation threshold for triggering the RRM measurement result reporting; or, when the RRM measurement parameter to be compared for the RRM measurement result reporting event trigger is configured as RSRQ in the event trigger configuration information, the first fluctuation threshold is an RSRQ measurement value fluctuation threshold for triggering the RRM measurement result reporting; or, when the RRM measurement parameter to be compared for the RRM measurement result reporting event trigger is configured as SINR in the event trigger configuration information, the first fluctuation threshold is an SINR measurement value fluctuation threshold for triggering the RRM measurement result reporting; in addition, the RRM measurement parameter corresponding to the first fluctuation threshold can also be indicated by the following fourth indication information, etc.;
third indication information used to indicate a reference signal type to which the first threshold and/or the first fluctuation threshold is applicable; for example, when the first threshold is configured in the event trigger configuration information, the third indication information is used to indicate a reference signal type to which the first threshold is applicable; or, when the first fluctuation threshold is configured in the event trigger configuration information, the third indication information is used to indicate a reference signal type to which the fluctuation threshold is applicable; or, when the first threshold and the first fluctuation threshold are configured in the event trigger configuration information, the third indication information is used to indicate a reference signal type to which the first threshold and the first fluctuation threshold are applicable; optionally, the reference signal type may be SSB and/or CSI-RS, for example, the first threshold and/or the first fluctuation threshold may be configured separately for each reference signal type, etc., which is not limited thereto;
fourth indication information used to indicate a measurement parameter corresponding to the first threshold and/or the first fluctuation threshold; for example, when the first threshold is configured in the event trigger configuration information, the fourth indication information is used to indicate an RRM measurement parameter corresponding to the first threshold; or, when the first fluctuation threshold is configured in the event trigger configuration information, the fourth indication information is used to indicate an RRM measurement parameter corresponding to the first fluctuation threshold; or, when the first threshold and the first fluctuation threshold are configured in the event trigger configuration information, the fourth indication information is used to indicate an RRM measurement parameter corresponding to the first threshold and the first fluctuation threshold;
a first duration of the first threshold or the first fluctuation threshold; for example, the first duration may be expressed as an absolute time, that is, the first threshold and/or the first fluctuation threshold is valid within the configured absolute time; or, the first duration may also be expressed as a measurement number, that is, the first threshold and/or the first fluctuation threshold is valid within the configured measurement number; or, the first duration may be expressed as a proportion of the measurement number; for example, if the measurement number is 100 and the proportion of measurement number is 0.8, then it is necessary that 80 measurement values of 100 measurements meet the first threshold and/or the first fluctuation threshold;
a cell number N1 for reporting RRM measurements, where N1 is a positive integer; for example, the cell number N1 is used to indicate that the UE can only report RRM measurement values of cells whose RRM measurement values rank in the top N1 positions, to the network device;
fifth indication information used to indicate that the UE can only report a measurement result of a cell with the largest number of beams whose RRM measurement value is greater than the second threshold, or to indicate that the UE can only report measurement results of N2 cells with the largest number of beams whose RRM measurement value is greater than the second threshold, where N2 is a positive integer;
a third threshold of the layer 1 beam measurement value; for example, when a layer 1 beam measurement parameter to be compared for the layer 1 beam measurement result reporting event trigger is configured as RSRP in the event trigger configuration information, the third threshold is an RSRP measurement value threshold for triggering the layer 1 beam measurement result reporting; or, when the layer 1 beam measurement parameter to be compared for the layer 1 beam measurement result reporting event trigger is configured as RSRQ in the event trigger configuration information, the third threshold is an RSRQ measurement value threshold for triggering the layer 1 beam measurement result reporting; or, when the layer 1 beam measurement parameter to be compared for the layer 1 beam measurement result reporting event trigger is configured as SINR in the event trigger configuration information, the third threshold is an SINR measurement value threshold for triggering the layer 1 beam measurement result reporting; in addition, the layer 1 beam measurement parameter corresponding to the third threshold can also be indicated by the following seventh indication information, etc., and the embodiments of the present disclosure are not limited thereto;
a second fluctuation threshold of the layer 1 beam measurement value; for example, when the layer 1 beam measurement parameter to be compared for the layer 1 beam measurement result reporting event trigger is configured as RSRP in the event trigger configuration information, the second fluctuation threshold is an RSRP measurement value fluctuation threshold for triggering the layer 1 beam measurement result reporting; or, when the layer 1 beam measurement parameter to be compared for the layer 1 beam measurement result reporting event trigger is configured as RSRQ in the event trigger configuration information, the second fluctuation threshold is an RSRQ measurement value fluctuation threshold for triggering the layer 1 beam measurement result reporting; or, when the layer 1 beam measurement parameter to be compared for the layer 1 beam measurement result reporting event trigger is configured as SINR in the event trigger configuration information, the second fluctuation threshold is an SINR measurement value fluctuation threshold for triggering the layer 1 beam measurement result reporting; in addition, the layer 1 beam measurement parameter corresponding to the second fluctuation threshold can also be indicated by the following seventh indication information, etc., and the embodiments of the present disclosure are not limited thereto;
sixth indication information used to indicate a reference signal type to which the third threshold or the second fluctuation threshold is applicable; for example, when the third threshold is configured in the event trigger configuration information, the sixth indication information is used to indicate a reference signal type to which the third threshold is applicable; or, when the second fluctuation threshold is configured in the event trigger configuration information, the sixth indication information is used to indicate a reference signal type to which the second fluctuation threshold is applicable; or, when the third threshold and the second fluctuation threshold are configured in the event trigger configuration information, the sixth indication information is used to indicate a reference signal type to which the third threshold and the second fluctuation threshold are applicable; optionally, the reference signal type may be SSB and/or CSI-RS, for example, the third threshold and/or the second fluctuation threshold may be configured for each reference signal type, etc., and the embodiments of the present disclosure are not limited thereto;
seventh indication information used to indicate a measurement parameter corresponding to the third threshold or the second fluctuation threshold; for example, when the third threshold is configured in the event trigger configuration information, the seventh indication information is used to indicate a layer 1 beam measurement parameter corresponding to the third threshold; or, when the second fluctuation threshold is configured in the event trigger configuration information, the seventh indication information is used to indicate a layer 1 beam measurement parameter corresponding to the second fluctuation threshold; or, when the third threshold and the second fluctuation threshold are configured in the event trigger configuration information, the seventh indication information is used to indicate the third threshold and the layer 1 beam measurement parameter corresponding to the second fluctuation threshold;
a second duration of the third threshold or the second fluctuation threshold; for example, the second duration may be expressed as an absolute time, that is, the third threshold and/or the second fluctuation threshold are valid within the configured absolute time; or, the second duration may also be expressed as measurement number, that is, the third threshold and/or the second fluctuation threshold are valid within the configured measurement number; or, the first duration may be expressed as a proportion of measurement number; for example, if the measurement number is 100 and the proportion of the measurement number is 0.8, then it is necessary that 80 measurement values of 100 measurements meets the third threshold and/or the second fluctuation threshold;
a beam number N3 for reporting layer 1 beam measurements, N3 is a positive integer; for example, the beam number N3 is used to indicate that the UE can only report layer 1 beam measurement values ranked in the first N3 positions, to the network device.

Optionally, the RRM measurement value includes at least one of the following:
measurement value after layer 1 filtering and beam averaging;
measurement value after layer 1 filtering and layer 3 beam filtering;
measurement value after layer 1 filtering, beam averaging and layer 3 cell filtering.

Optionally, the layer 1 beam measurement value includes at least one of the following:
beam measurement value after only layer 1 filtering;
measurement value after layer 1 filtering and beam measurement number averaging.

Optionally, the trigger condition of the event trigger configuration information include at least one of the following:
a measurement value of the RRM measurement is greater than the first threshold; for example, when and only when a measurement value of an RRM measurement of a candidate cell is greater than the first threshold, the UE can report a layer 1 measurement result of the candidate cell to the network device;
a measurement value of the RRM measurement is always greater than the first threshold within the first duration; for example, when and only when a measurement value of an RRM measurement of a candidate cell is always greater than the first threshold within the first duration, the UE can report a layer 1 measurement result of the candidate cell to the network device;
a measurement value of the RRM measurement is greater than a measurement result of a serving cell; for example, when and only when a measurement value of an RRM measurement of a candidate cell is greater than a measurement value of an RRM measurement of a serving cell, the UE can report a layer 1 measurement result of the candidate cell to the network device;
a measurement value of an RRM measurement is always greater than a measurement result of a serving cell within the first duration; for example, when and only when the measurement value of the RRM measurement of the candidate cell is always greater than the measurement result of the serving cell within the first duration, the UE can report the layer 1 measurement result of the candidate cell to the network device;
a measurement value of the RRM measurement belongs to measurement values of the first (N1+1) RRM measurements after measurement values of all RRM measurements are sorted by the measurement values; for example, when and only when a measurement value of an RRM measurement of a candidate cell is within the first (N1+1) positions after measurement values of all RRM measurements are sorted by the measurement values, the UE can report the layer 1 measurement result of the candidate cell to the network device;
a measurement value of an RRM measurement belong to measurement values of the first (N1+1) RRM measurements after measurement values of all RRM measurements are sorted by the measurement values within the first duration; for example, when and only when a measurement value of an RRM measurement of a candidate cell is within the first (N1+1) positions after measurement values of all RRM measurements are sorted by the measurement values within the first duration, the UE can report the layer 1 measurement result of the candidate cell to the network device;
a measurement value of an RRM measurement is a beam measurement value of a first cell, and the first cell is a cell with the largest number of beams greater than the second threshold; for example, the UE can only report a measurement value of an RRM measurement of a cell with the largest number of beams greater than the second threshold among candidate cells, to the network device;
a measurement value of the RRM measurement is a beam measurement value of a second cell, and the second cell is a cell whose number of beams greater than the second threshold ranks in the top N2+1; for example, the UE can only report a measurement value of an RRM measurement of a cell whose number of beams greater than the second threshold ranks in the top N2+1 among candidate cells, to the network device;
a change amount of the measurement value of the RRM measurement is less than the first fluctuation threshold; for example, when and only when the change amount of the measurement value of the RRM measurement of the candidate cell is less than the first fluctuation threshold, the UE can report a layer 1 measurement result of the candidate cell to the network device;
a change amount of the measurement value of the RRM measurement is always less than the first fluctuation threshold within the first duration; for example, when and only when the measurement value of the RRM measurement of the candidate cell is always less than the first fluctuation threshold within the first duration, the UE can report the layer 1 measurement result of the candidate cell to the network device;
a measurement value of the layer 1 beam measurement is greater than the third threshold; for example, when and only when the measurement value of the layer 1 beam measurement is greater than the third threshold, the UE can report the layer 1 measurement result to the network device;
a measurement value of the layer 1 beam measurement is always greater than the third threshold within the second duration; for example, when and only when the measurement value of the layer 1 beam measurement is always greater than the third threshold within the second duration, the UE can report the layer 1 measurement result to the network device;
a measurement value of the layer 1 beam measurement is the best among all the measurement values of the layer 1 beam measurement; for example, when and only when the measurement value of the layer 1 beam measurement is the best among all the measurement values of the layer 1 beam measurement, the UE can report the layer 1 measurement result to the network device. For example, the measurement value of the layer 1 beam measurement is an optimal value among all the measurement values of the layer 1 beam measurement, that is, the measurement value of the layer 1 beam measurement is the maximum value of all the measurement values of the layer 1 beam measurement;
a measurement value of the layer 1 beam measurement is optimal among all the measurement values of the layer 1 beam measurement within the second duration; for example, when and only when the measurement value of the layer 1 beam measurement parameter is always the best among all the measurement values of the layer 1 beam measurement within the second duration, the UE can report the layer 1 measurement result to the network device; for example, when the measurement value of the layer 1 beam measurement parameter is always optimal among all the measurement values of the layer 1 beam measurement within the second duration, that is, the measurement value of the layer 1 beam measurement is always the maximum value among the measurement values of all layer 1 beam measurements within the second duration;
a measurement value of the layer 1 beam measurement belongs to the first (N3+1) layer 1 beam measurement values among all layer 1 beam measurement values sorted by measurement values; for example, only when and only when the measurement value of the layer 1 beam measurement parameter is in the first (N2+1) positions among all layer 1 beam measurement values sorted by measurement values, the UE can report the layer 1 measurement result to the network device;
a measurement value of the layer 1 beam measurement belongs to the first (N3+1) layer 1 beam measurement values among all layer 1 beam measurement values sorted by measurement values, within the second duration; for example, only when and only when the measurement value of the layer 1 beam measurement parameter is always in the first (N2+1) positions among all layer 1 beam measurement values sorted by measurement values, within the second duration, the UE can report the layer 1 measurement result to the network device;
a change amount of the measurement value of the layer 1 beam measurement is less than the second fluctuation threshold; for example, when and only when the change amount of the measurement value of the layer 1 beam measurement of the candidate cell is less than the second fluctuation threshold, the UE can report the layer 1 measurement result to the network device;
measurement values of the layer 1 beam measurement are all less than the second fluctuation threshold within the second duration. For example, when and only when the change amount of the measurement value of the layer 1 beam measurement of the candidate cell is always less than the second fluctuation threshold within the second duration, the UE can report the layer 1 measurement result to the network device.

Optionally, after the UE sends the layer 1 measurement result to the network device, the method further includes:
receiving, by the UE, a first command sent by the network device; where the first command is a layer 1 command or a layer 2 command; for example, the layer 1 command is downlink control information (DCI), and the layer 2 command is MAC CE.

The UE performs cell management according to the first command; where the cell management includes at least one of the following:
cell handover;
primary service cell change;
primary service cell addition;
PSCell change;
PSCell addition;
Secondary Cell (Scell) change;
Scell addition.

In the embodiment of the present disclosure, when the event trigger configuration information is configured by the network device and/or the event trigger configuration information is determined based on the protocol predefinition, when and only when the layer 1 measurement result meets the trigger condition of the event trigger configuration information, the UE reports the layer 1 measurement result to the network device to ensure that the layer 1 measurement result reported by the UE is relatively stable, thereby improving the reliability of the layer 1 measurement result reported by the UE to the network device, which is conducive to improving reliability of cell mobility decision on the network device and reducing delay. In addition, the network device sends the result of cell mobility decision to the UE through a layer 1 command or a layer 2 command to instruct the UE to perform cell management, which is also beneficial to further reduce the delay of cell management.

The UE involved in the embodiments of the present application may be a device that provides voice and/or data connectivity to users, a handheld device with a wireless connection function, or other processing devices connected to a wireless modem, etc. In different systems, the names of UE may also be different. For example, in a 5G system, a terminal device may be called user equipment (UE). Wireless terminal device can communicate with one or more core networks (CN) via a Radio Access Network (RAN). The wireless terminal device may be a mobile terminal device, such as a mobile phone (also known as a "cellular phone") and computers with mobile terminal devices, which may be, for example, portable, pocket-sized, handheld, computer-built-in or vehicle-mounted mobile devices, which exchange speech and/or data with the radio access network, for example, Personal Communication Service (PCS) phones, cordless phones, Session Initiated Protocol (SIP) phones, Wireless Local Loop (WLL) stations, Personal Digital Assistants (PDA) and other equipment. Wireless terminal device may also be called a system, a subscriber unit, a subscriber station, a mobile station, a mobile, a remote station, or an access point, remote terminal, access terminal, user terminal, user agent, user device, which are not limited in the embodiments of the present application.

As shown in FIG. 2, one embodiment of the present disclosure provides a measurement reporting method, which includes the following steps.

Step 21: receiving, by a network device, a layer 1 measurement result sent by a user equipment (UE); where the layer 1 measurement result meets a preset condition, and the preset condition includes a trigger condition of event trigger configuration information.

Optionally, the event trigger configuration information is configured by the network device or predefined by a protocol.

Optionally, the measurement reporting method further includes:
sending, by the network device, layer 1 measurement configuration information to the UE;
where the layer 1 measurement configuration information carries the event trigger configuration information; or the layer 1 measurement configuration information is associated with first measurement reporting identifier information or first measurement identifier information, and the first measurement reporting identifier information or first measurement identifier information is associated with the event trigger configuration information.

Optionally, the measurement reporting method further includes:
sending, by the network device, an RRC message and/or MAC CE to the UE; wherein the RRC message and/or MAC CE carries the event trigger configuration information.

Optionally, the event trigger configuration information includes at least one of the following:
beam identifier;
measurement reporting identifier;
reference signal resource configuration identifier;
a cell identifier of a cell associated with the beam identifier;
frequency information of a cell associated with the beam identifier;
TCI identifier associated with the beam identifier;
beam measurement parameter;
RRM measurement parameter;
resource configuration information of resources corresponding to reported layer 1 measurement result;
measurement configuration information for RRM measurement;
first indication information used to indicate that RRM measurement is determined based on layer 3 measurement configuration information;
second indication information used to indicate that the RRM measurement is determined based on a measurement object identifier of layer 3 measurement configuration information;
a first threshold of the RRM measurement value;
a first fluctuation threshold of an RRM measurement value;
third indication information used to indicate a reference signal type to which the first threshold and/or the first fluctuation threshold is applicable;
fourth indication information used to indicate a measurement parameter corresponding to the first threshold and/or the first fluctuation threshold;
a first duration of the first threshold or the first fluctuation threshold;
a cell number N1 for reporting RRM measurements, where N1 is a positive integer;
fifth indication information used to indicate that the UE can only report a measurement result of a cell with the largest number of beams whose RRM measurement value is greater than the second threshold, or to indicate that the UE can only report measurement results of N2 cells with the largest number of beams whose RRM measurement value is greater than the second threshold, where N2 is a positive integer;
a third threshold of the layer 1 beam measurement value;
a second fluctuation threshold of the layer 1 beam measurement value;
sixth indication information used to indicate a reference signal type to which the third threshold or the second fluctuation threshold is applicable;
seventh indication information used to indicate a measurement parameter corresponding to the third threshold or the second fluctuation threshold;
a second duration of the third threshold or the second fluctuation threshold;
a beam number N3 for reporting layer 1 beam measurements, N3 is a positive integer.

Optionally, the RRM measurement value includes at least one of the following:
measurement value after layer 1 filtering and beam averaging;
measurement value after layer 1 filtering and layer 3 beam filtering;
measurement value after layer 1 filtering, beam averaging and layer 3 cell filtering.

Optionally, the layer 1 beam measurement value includes at least one of the following:
beam measurement value after only layer 1 filtering;
measurement value after layer 1 filtering and beam measurement number averaging.

Optionally, the trigger condition of the event trigger configuration information includes at least one of the following:
a measurement value of the RRM measurement is greater than the first threshold;
a measurement value of the RRM measurement is always greater than the first threshold within the first duration;
a measurement value of the RRM measurement is greater than a measurement result of a serving cell;
a measurement value of an RRM measurement is always greater than a measurement result of a serving cell within the first duration;
a measurement value of the RRM measurement belongs to measurement values of the first (N1+1) RRM measurements after measurement values of all RRM measurements are sorted by the measurement values;
a measurement value of an RRM measurement belong to measurement values of the first (N1+1) RRM measurements after measurement values of all RRM measurements are sorted by the measurement values within the first duration;
a measurement value of an RRM measurement is a beam measurement value of a first cell, and the first cell is a cell with the largest number of beams greater than the second threshold;
a measurement value of the RRM measurement is a beam measurement value of a second cell, and the second cell is a cell whose number of beams greater than the second threshold ranks in the top N2+1;
a change amount of the measurement value of the RRM measurement is less than the first fluctuation threshold;
a change amount of the measurement value of the RRM measurement is always less than the first fluctuation threshold within the first duration;
a measurement value of the layer 1 beam measurement is greater than the third threshold;
a measurement value of the layer 1 beam measurement is always greater than the third threshold within the second duration;
a measurement value of the layer 1 beam measurement is the best among all the measurement values of the layer 1 beam measurement;
a measurement value of the layer 1 beam measurement is optimal among all the measurement values of the layer 1 beam measurement within the second duration;
a measurement value of the layer 1 beam measurement belongs to the first (N3+1) layer 1 beam measurement values among all layer 1 beam measurement values sorted by measurement values;
a measurement value of the layer 1 beam measurement belongs to the first (N3+1) layer 1 beam measurement values among all layer 1 beam measurement values sorted by measurement values, within the second duration;
a change amount of the measurement value of the layer 1 beam measurement is less than the second fluctuation threshold;
measurement values of the layer 1 beam measurement are all less than the second fluctuation threshold within the second duration.

Optionally, the layer 1 measurement result is carried by at least one of the following:
PUSCH;
PUCCH;
MAC CE.

Optionally, the layer 1 measurement result includes at least one of the following:
beam identifier;
eighth indication information used to indicate that the layer 1 measurement result meets the trigger condition of the event trigger configuration information;
TCI identifier;
resource set identifier;
resource configuration identifier;
layer 1 beam measurement value;
layer 1 beam measurement parameter corresponding to the layer 1 beam measurement value;
RRM measurement value;
RRM measurement parameter corresponding to the RRM measurement value.

Optionally, after receiving, by the network device, the layer 1 measurement result sent by the UE, the method further includes:
sending, by the network device, a first command to the UE according to the layer 1 measurement result; where the first command is used to perform cell management, and the first command is a layer 1 command or a layer 2 command.

The cell management includes at least one of the following:
cell handover;
primary service cell change;
primary service cell addition;
PSCell change;
PSCell addition;
Secondary Cell (Scell) change;
Scell addition.

The above method in the embodiment of the present disclosure corresponds to the measurement reporting method on the UE, and the two embodiments can refer to each other and can achieve the same technical effect, which will not be described here to avoid repetition.

The network device involved in the embodiment of the present application may be a base station, and the base station may include a plurality of cells for providing services for the UE. According to different specific application scenarios, the base station may also be referred as an access point, or the base station may be a device in an access network that communicates with wireless terminal devices through one or more sectors on air interfaces, or other names. The network device may be used to exchange received frames with internet protocol (IP) packets, and act as a router between the wireless terminal device and the rest of the access network, where the rest of the access network may include an internet protocol (IP) communication network. The network device may also coordinate attribute management for air interfaces. For example, the network device involved in the embodiments of the present disclosure may be a base transceiver station (BTS) in global system for mobile communications (GSM) or code division multiple access (CDMA), a NodeB in wide-band code division multiple access (WCDMA), an evolutional Node B (eNB or e-NodeB) in long term evolution (LTE) system, a 5G base station (gNB) in the 5G network architecture (next generation system), a home evolved Node B (HeNB), a relay node, a femto, or a pico, which are not limited in the embodiments of the present disclosure. In some network structures, the network device may include a centralized unit (CU) node and a distributed unit (DU) node; and the centralized unit and the distributed unit may also be geographically separated.

An interactive process of the measurement reporting method between the UE and the network device of the present disclosure will be described hereinafter with reference to specific embodiments.

Embodiment 1: the network device delivers, to the UE, event trigger configuration information for reporting layer 1 measurement result.

Mode 1: the network device delivers, to the UE, the event trigger configuration information for reporting layer 1 measurement result, through an RRC message.

Specific step includes: delivering, by the network device, an RRC message to the UE, where the RRC message carries the event trigger configuration information for reporting layer 1 measurement result.

Specifically, it includes one of the following:
(1) the network device associates a measurement reporting identifier or measurement identifier of the current RRM measurement configuration information in the existing L1 measurement configuration information, and the reporting configuration information associated with the measurement identifier or the measurement reporting identifier is the event trigger configuration information;
(2) the network device extends the event trigger configuration information in the existing L1 measurement configuration information;
(3) the network device introduces new L1 measurement configuration information, and indicates the event trigger configuration information in the newly introduced L1 measurement information.

Mode 2: the network device delivers the event trigger configuration information for reporting layer 1 measurement results through the MAC CE.

Specific step includes: delivering, by the network device, a MAC CE to the UE, where the MAC CE carries the event trigger configuration information for reporting layer 1 measurement result.

Embodiment 2: content of event trigger configuration information and content of trigger condition.

The trigger condition in the event trigger configuration information may take a measurement value of RRM measurement (or referred as a measurement value of L3 cell-level measurement) as a condition, or take a measurement value of L1 beam measurement as a condition, or take the measurement value of RRM measurement and a measurement value of L1 beam measurement as conditions.

Specifically, in a scenario where the measurement value of RRM measurement is used as a condition, the trigger condition include the following cases:
Case 1: when and only when a measurement value of the RRM measurement of a candidate cell is greater than a preconfigured first threshold of the RRM measurement value, the UE can report a layer 1 measurement result of the candidate cell to the network device;
Case 2: when and only when a measurement value of an RRM measurement of a candidate cell is always greater than the first threshold within the first duration of the first threshold, the UE can report a layer 1 measurement result of the candidate cell to the network device;
Case 3: when and only when a measurement value of an RRM measurement of a candidate cell is greater than a measurement value of an RRM measurement of a serving cell, the UE can report a layer 1 measurement result of the candidate cell to the network device;
Case 4: when and only when a measurement value of an RRM measurement of a candidate cell is always greater than a measurement value of an RRM measurement of a serving cell within the first duration, the UE can report a layer 1 measurement result of the candidate cell to the network device;
Case 5: when and only when a measurement value of an RRM measurement of a candidate cell is in the first (N1+1) positions in the order of all the measurement values of the RRM measurements, the UE can report a layer 1 measurement result of the candidate cell to the network device; N1 is a pre-configured cell number to report RRM measurements;
Case 6: when and only when a measurement value of an RRM measurement of a candidate cell is in the first (N1+1) positions in the order of all the measurement values of the RRM measurements, within the first duration, the UE can report a layer 1 measurement result of the candidate cell to the network device;
Case 7: the UE can only report a measurement value of an RRM measurement of a cell with the largest number of beams greater than the second threshold among the candidate cells, to the network device;
Case 8: the UE can only report a measurement value of an RRM measurement of a cell whose number of beams greater than the second threshold ranks in the top N2+1 among candidate cells, to the network device; N2 is a preconfigured number of cells with the most beams greater than the second threshold;
Case 9: when and only when the change amount of the measurement value of the RRM measurement of the candidate cell is less than the first fluctuation threshold of the RRM measurement value, the UE can report a layer 1 measurement result of the candidate cell to the network device;
Case 10: when and only when the measurement value of the RRM measurement of the candidate cell is always less than the first fluctuation threshold within the first duration of the first fluctuation threshold, the UE can report the layer 1 measurement result of the candidate cell to the network device.

For the above scenario, the event trigger configuration information includes at least one of the following information:
beam identifier;
measurement reporting identifier;
reference signal resource configuration identifier;
a cell identifier of a cell associated with the beam identifier;
frequency information of a cell associated with the beam identifier;
TCI identifier associated with the beam identifier;
beam measurement parameter;
RRM measurement parameter;
resource configuration information of resources corresponding to reported layer 1 measurement result;
measurement configuration information for RRM measurement;
first indication information used to indicate that RRM measurement is determined based on layer 3 measurement configuration information;
second indication information used to indicate that the RRM measurement is determined based on a measurement object identifier of layer 3 measurement configuration information;
a first threshold of the RRM measurement value;
a first fluctuation threshold of an RRM measurement value;
third indication information used to indicate a reference signal type to which the first threshold and/or the first fluctuation threshold is applicable;
fourth indication information used to indicate a measurement parameter corresponding to the first threshold and/or the first fluctuation threshold;
a first duration of the first threshold or the first fluctuation threshold;
a cell number N1 for reporting RRM measurements, where N1 is a positive integer;
fifth indication information used to indicate that the UE can only report a measurement result of a cell with the largest number of beams whose RRM measurement value is greater than the second threshold, or to indicate that the UE can only report measurement results of N2 cells with the largest number of beams whose RRM measurement value is greater than the second threshold, where N2 is a positive integer.

Specifically, in the scenario where a measurement value of L1 beam measurement is used as the condition, the trigger condition includes the following cases:
Case 1: when and only when a measurement value of a layer 1 beam measurement is greater than the third threshold of the layer 1 beam measurement value, the UE can report the layer 1 measurement result to the network device;
Case 2: when and only when a measurement value of a layer 1 beam measurement is always greater than the third threshold within the second duration of the third threshold, the UE can report the layer 1 measurement result to the network device;
Case 3: when and only when a measurement value of a layer 1 beam measurement is the optimal among all the measurement values of the layer 1 beam measurement, the UE can report the layer 1 measurement result to the network device;
Case 4: when and only when a measurement value of a layer 1 beam measurement quantity is always the optimal among all layer 1 beam measurement values within the second duration, the UE can report the layer 1 measurement result to the network device;
Case 5: when and only when a measurement value of a layer 1 beam measurement parameter is in the first (N2+1) positions among all layer 1 beam measurement values sorted by measurement values, the UE can report the layer 1 measurement result to the network device;
Case 6: when and only when a measurement value of a layer 1 beam measurement parameter is in the first (N2+1) positions among all layer 1 beam measurement values sorted by measurement values, within the second duration, the UE can report the layer 1 measurement result to the network device;
Case 7: when and only when a change amount in the measurement value of the layer 1 beam measurement of the candidate cell is less than the second fluctuation threshold of the layer 1 beam measurement value, the UE can report the layer 1 measurement result to the network device;
Case 8: when and only when a change amount in the measurement value of the layer 1 beam measurement of the candidate cell is always less than the second fluctuation threshold of the layer 1 beam measurement value, within the second duration of the second fluctuation threshold, the UE can report the layer 1 measurement result to the network device.

For the above scenario, the event trigger configuration information includes at least one of the following information:
beam identifier;
measurement reporting identifier;
reference signal resource configuration identifier;
a cell identifier of a cell associated with the beam identifier;
frequency information of a cell associated with the beam identifier;
TCI identifier associated with the beam identifier;
beam measurement parameter;
resource configuration information of resources corresponding to reported layer 1 measurement result;
a third threshold of the layer 1 beam measurement value;
a second fluctuation threshold of the layer 1 beam measurement value;
sixth indication information used to indicate a reference signal type to which the third threshold or the second fluctuation threshold is applicable;
seventh indication information used to indicate a measurement parameter corresponding to the third threshold or the second fluctuation threshold;
a second duration of the third threshold or the second fluctuation threshold;
a beam number N3 for reporting layer 1 beam measurements, N3 is a positive integer.

Embodiment 3: the UE performs beam measurement reporting based on the trigger condition corresponding to the event trigger configuration information configured by the network device.
Case 1: for the case where the measurement value of RRM measurement is used as the trigger condition, when and only when the UE evaluates and finds that the trigger condition corresponding to the event trigger configuration information configured by the network device is met, the UE reports measurement values of all beam measurements of candidate cells that meet the trigger condition, to the network device;
Case 2: for the case where the measurement value of L1 beam measurement is used as the trigger condition, when and only when the UE evaluates and finds that the trigger condition corresponding to the event trigger configuration information configured by the network device is met, the UE reports a beam measurement value that meets the trigger condition to the network device;
Case 3: for the case where the measurement value of RRM measurement and the measurement value of L1 beam measurement are used as trigger conditions, when and only when the UE evaluates and finds that the trigger condition corresponding to the event trigger configuration information configured by the network device is met, the UE reports the measurement value of the beam measurement in the candidate cell that meets the trigger condition to the network device, and a reported beam measurement value also needs to meet the trigger condition of the measurement value of the above L1 beam measurement.

Embodiment 4: interaction process between UE and network device.

Step 1: the network device delivers measurement configuration information for L1 measurement. The measurement configuration information includes event trigger configuration information. Specific delivery mode and content of event trigger configuration information can refer to the embodiment 1 and embodiment 2, which will not be repeated here.

Step 2: after receiving the measurement configuration information, the UE saves the measurement configuration information and evaluates the measurement configuration information.

Step 3: when the UE evaluates and finds that the L1 measurement result meets the trigger condition of the event trigger configuration information, the UE reports the L1 measurement result to the network device.

The L1 measurement result may be reported in at least one of the following ways:
being carried in PUCCH and reported;
being carried in PUSCH and reported;
being carried in MAC CE and reported.

In the above solution of the present disclosure, when the L1 measurement result meets the trigger condition of the event trigger configuration information, the UE reports the L1 measurement result to the network device. That is, the L1 measurement result reported by the UE is a relatively stable measurement result after selection. The network device makes a cell management decision based on the L1 measurement result, thereby avoiding the ping-pong phenomenon and improving the success probability. Further, the event-triggered mode of reporting L1 measurement results can not only meet network requirements, but also reduce the reporting frequency, thereby reducing overhead.

The measurement reporting method of the present disclosure is introduced above, and the corresponding network device will be further described in conjunction with the accompanying drawings in the following embodiments.

As shown in FIG. 3, one embodiment of the present disclosure provides a user equipment (UE) 300, including:
an obtaining unit 310 used to obtain a layer 1 measurement result;
a sending unit 320 used to, if the layer 1 measurement result meets a preset condition, send the layer 1 measurement result to the network device; where the preset condition includes a trigger condition of event trigger configuration information.

Optionally, the event trigger configuration information is configured by the network device or predefined by a protocol.

Optionally, the UE 300 further includes:
a first receiving unit used to receive layer 1 measurement configuration information sent by the network device;
where the layer 1 measurement configuration information carries the event trigger configuration information; or the layer 1 measurement configuration information is associated with first measurement reporting identifier information or first measurement identifier information, and the first measurement reporting identifier information or first measurement identifier information is associated with the event trigger configuration information.

Optionally, the UE 300 further includes:
a second receiving unit used to receive a radio resource control RRC message and/or a media access control unit MAC CE sent by the network device; wherein the RRC message and/or MAC CE carries the event trigger configuration information.

Optionally, the event trigger configuration information includes at least one of the following:
beam identifier;
measurement reporting identifier;
reference signal resource configuration identifier;
a cell identifier of a cell associated with the beam identifier;
frequency information of a cell associated with the beam identifier;
TCI identifier associated with the beam identifier;
beam measurement parameter;
RRM measurement parameter;
resource configuration information of resources corresponding to reported layer 1 measurement result;
measurement configuration information for RRM measurement;
first indication information used to indicate that RRM measurement is determined based on layer 3 measurement configuration information;
second indication information used to indicate that the RRM measurement is determined based on a measurement object identifier of layer 3 measurement configuration information;
a first threshold of the RRM measurement value;
a first fluctuation threshold of an RRM measurement value;
third indication information used to indicate a reference signal type to which the first threshold and/or the first fluctuation threshold is applicable;
fourth indication information used to indicate a measurement parameter corresponding to the first threshold and/or the first fluctuation threshold;
a first duration of the first threshold or the first fluctuation threshold;
a cell number N1 for reporting RRM measurements, where N1 is a positive integer;
fifth indication information used to indicate that the UE can only report a measurement result of a cell with the largest number of beams whose RRM measurement value is greater than the second threshold, or to indicate that the UE can only report measurement results of N2 cells with the largest number of beams whose RRM measurement value is greater than the second threshold, where N2 is a positive integer;
a third threshold of the layer 1 beam measurement value;
a second fluctuation threshold of the layer 1 beam measurement value;
sixth indication information used to indicate a reference signal type to which the third threshold or the second fluctuation threshold is applicable;
seventh indication information used to indicate a measurement parameter corresponding to the third threshold or the second fluctuation threshold;
a second duration of the third threshold or the second fluctuation threshold;
a beam number N3 for reporting layer 1 beam measurements, N3 is a positive integer.

Optionally, the RRM measurement value includes at least one of the following:
measurement value after layer 1 filtering and beam averaging;
measurement value after layer 1 filtering and layer 3 beam filtering;
measurement value after layer 1 filtering, beam averaging and layer 3 cell filtering.

Optionally, the layer 1 beam measurement value includes at least one of the following:
beam measurement value after only layer 1 filtering;
measurement value after layer 1 filtering and beam measurement number averaging.

Optionally, the trigger condition of the event trigger configuration information includes at least one of the following:
a measurement value of the RRM measurement is greater than the first threshold;
a measurement value of the RRM measurement is always greater than the first threshold within the first duration;
a measurement value of the RRM measurement is greater than a measurement result of a serving cell;
a measurement value of an RRM measurement is always greater than a measurement result of a serving cell within the first duration;
a measurement value of the RRM measurement belongs to measurement values of the first (N1+1) RRM measurements after measurement values of all RRM measurements are sorted by the measurement values;
a measurement value of an RRM measurement belong to measurement values of the first (N1+1) RRM measurements after measurement values of all RRM measurements are sorted by the measurement values within the first duration;
a measurement value of an RRM measurement is a beam measurement value of a first cell, and the first cell is a cell with the largest number of beams greater than the second threshold;
a measurement value of the RRM measurement is a beam measurement value of a second cell, and the second cell is a cell whose number of beams greater than the second threshold ranks in the top N2+1;
a change amount of the measurement value of the RRM measurement is less than the first fluctuation threshold;
a change amount of the measurement value of the RRM measurement is always less than the first fluctuation threshold within the first duration;
a measurement value of the layer 1 beam measurement is greater than the third threshold;
a measurement value of the layer 1 beam measurement is always greater than the third threshold within the second duration;
a measurement value of the layer 1 beam measurement is the best among all the measurement values of the layer 1 beam measurement;
a measurement value of the layer 1 beam measurement is optimal among all the measurement values of the layer 1 beam measurement within the second duration;
a measurement value of the layer 1 beam measurement belongs to the first (N3+1) layer 1 beam measurement values among all layer 1 beam measurement values sorted by measurement values;
a measurement value of the layer 1 beam measurement belongs to the first (N3+1) layer 1 beam measurement values among all layer 1 beam measurement values sorted by measurement values, within the second duration;
a change amount of the measurement value of the layer 1 beam measurement is less than the second fluctuation threshold;
measurement values of the layer 1 beam measurement are all less than the second fluctuation threshold within the second duration.

Optionally, the layer 1 measurement result is carried by at least one of the following:
PUSCH;
PUCCH;
MAC CE.

Optionally, the layer 1 measurement result includes at least one of the following:
beam identifier;
eighth indication information used to indicate that the layer 1 measurement result meets the trigger condition of the event trigger configuration information;
TCI identifier;
resource set identifier;
resource configuration identifier;
layer 1 beam measurement value;
layer 1 beam measurement parameter corresponding to the layer 1 beam measurement value;
RRM measurement value;
RRM measurement parameter corresponding to the RRM measurement value.

Optionally, the UE 300 further includes:
a third receiving unit used to receive a first command sent by the network device; wherein the first command is a layer 1 command or a layer 2 command;
a processing unit used to perform cell management according to the first command;
where the cell management includes at least one of the following:
   cell handover;
   primary service cell change;
   primary service cell addition;
   PSCell change;
   PSCell addition;
   Secondary Cell (Scell) change;
   Scell addition.

It is to be noted here that the above UE provided in the embodiment of the present disclosure can implement all the method steps implemented in the measurement reporting method embodiment on the above UE, and can achieve the same technical effect. The parts and beneficial effects that are the same as the method embodiment in this embodiment will not be described in detail here.

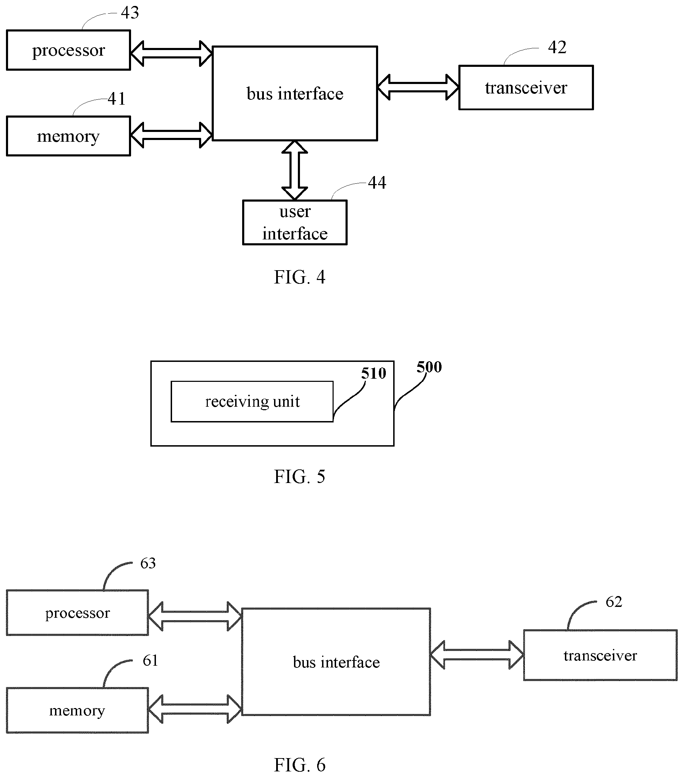

As shown in FIG. 4, one embodiment provides a measurement reporting device, which includes a memory 41, a transceiver 42, and a processor 43. The memory 41 is used to store a computer program. The transceiver 42 is used to send and receive data under the control of the processor 32; for example, the transceiver 42 is used to receive and send data under the control of the processor 43. The processor 43 is used to read the computer program in the memory 41 and perform the following operations:
obtaining a layer 1 measurement result;
if the layer 1 measurement result meets a preset condition, sending the layer 1 measurement result to the network device; where the preset condition includes a trigger condition of event trigger configuration information.

Optionally, the event trigger configuration information is configured by the network device or predefined by a protocol.

Optionally, the processor 43 is used to read the computer program in the memory 41 and perform the following operations:
receiving layer 1 measurement configuration information sent by the network device;
where the layer 1 measurement configuration information carries the event trigger configuration information; or the layer 1 measurement configuration information is associated with first measurement reporting identifier information or first measurement identifier information, and the first measurement reporting identifier information or first measurement identifier information is associated with the event trigger configuration information.

Optionally, the processor 43 is used to read the computer program in the memory 41 and perform the following operations:
receiving a radio resource control RRC message and/or a media access control unit MAC CE sent by the network device; wherein the RRC message and/or MAC CE carries the event trigger configuration information.

Optionally, the event trigger configuration information includes at least one of the following:
beam identifier;
measurement reporting identifier;
reference signal resource configuration identifier;
a cell identifier of a cell associated with the beam identifier;
frequency information of a cell associated with the beam identifier;
TCI identifier associated with the beam identifier;
beam measurement parameter;
RRM measurement parameter;
resource configuration information of resources corresponding to reported layer 1 measurement result;
measurement configuration information for RRM measurement;
first indication information used to indicate that RRM measurement is determined based on layer 3 measurement configuration information;
second indication information used to indicate that the RRM measurement is determined based on a measurement object identifier of layer 3 measurement configuration information;
a first threshold of the RRM measurement value;
a first fluctuation threshold of an RRM measurement value;
third indication information used to indicate a reference signal type to which the first threshold and/or the first fluctuation threshold is applicable;
fourth indication information used to indicate a measurement parameter corresponding to the first threshold and/or the first fluctuation threshold;
a first duration of the first threshold or the first fluctuation threshold;
a cell number N1 for reporting RRM measurements, where N1 is a positive integer;
fifth indication information used to indicate that the UE can only report a measurement result of a cell with the largest number of beams whose RRM measurement value is greater than the second threshold, or to indicate that the UE can only report measurement results of N2 cells with the largest number of beams whose RRM measurement value is greater than the second threshold, where N2 is a positive integer;
a third threshold of the layer 1 beam measurement value;
a second fluctuation threshold of the layer 1 beam measurement value;
sixth indication information used to indicate a reference signal type to which the third threshold or the second fluctuation threshold is applicable;
seventh indication information used to indicate a measurement parameter corresponding to the third threshold or the second fluctuation threshold;
a second duration of the third threshold or the second fluctuation threshold;
a beam number N3 for reporting layer 1 beam measurements, N3 is a positive integer.

Optionally, the RRM measurement value includes at least one of the following:
measurement value after layer 1 filtering and beam averaging;
measurement value after layer 1 filtering and layer 3 beam filtering;
measurement value after layer 1 filtering, beam averaging and layer 3 cell filtering.

Optionally, the layer 1 beam measurement value includes at least one of the following:
beam measurement value after only layer 1 filtering;
measurement value after layer 1 filtering and beam measurement number averaging.

Optionally, the trigger condition of the event trigger configuration information includes at least one of the following:
a measurement value of the RRM measurement is greater than the first threshold;
a measurement value of the RRM measurement is always greater than the first threshold within the first duration;
a measurement value of the RRM measurement is greater than a measurement result of a serving cell;
a measurement value of an RRM measurement is always greater than a measurement result of a serving cell within the first duration;
a measurement value of the RRM measurement belongs to measurement values of the first (N1+1) RRM measurements after measurement values of all RRM measurements are sorted by the measurement values;
a measurement value of an RRM measurement belong to measurement values of the first (N1+1) RRM measurements after measurement values of all RRM measurements are sorted by the measurement values within the first duration;
a measurement value of an RRM measurement is a beam measurement value of a first cell, and the first cell is a cell with the largest number of beams greater than the second threshold;
a measurement value of the RRM measurement is a beam measurement value of a second cell, and the second cell is a cell whose number of beams greater than the second threshold ranks in the top N2+1;
a change amount of the measurement value of the RRM measurement is less than the first fluctuation threshold;
a change amount of the measurement value of the RRM measurement is always less than the first fluctuation threshold within the first duration;
a measurement value of the layer 1 beam measurement is greater than the third threshold;
a measurement value of the layer 1 beam measurement is always greater than the third threshold within the second duration;
a measurement value of the layer 1 beam measurement is the best among all the measurement values of the layer 1 beam measurement;
a measurement value of the layer 1 beam measurement is optimal among all the measurement values of the layer 1 beam measurement within the second duration;
a measurement value of the layer 1 beam measurement belongs to the first (N3+1) layer 1 beam measurement values among all layer 1 beam measurement values sorted by measurement values;
a measurement value of the layer 1 beam measurement belongs to the first (N3+1) layer 1 beam measurement values among all layer 1 beam measurement values sorted by measurement values, within the second duration;
a change amount of the measurement value of the layer 1 beam measurement is less than the second fluctuation threshold;
measurement values of the layer 1 beam measurement are all less than the second fluctuation threshold within the second duration.

Optionally, the layer 1 measurement result is carried by at least one of the following:
PUSCH;
PUCCH;
MAC CE.

Optionally, the layer 1 measurement result includes at least one of the following:
beam identifier;
eighth indication information used to indicate that the layer 1 measurement result meets the trigger condition of the event trigger configuration information;
TCI identifier;
resource set identifier;
resource configuration identifier;
layer 1 beam measurement value;
layer 1 beam measurement parameter corresponding to the layer 1 beam measurement value;
RRM measurement value;
RRM measurement parameter corresponding to the RRM measurement value.

Optionally, the processor 43 is used to read the computer program in the memory 41 and perform the following operations:
receiving a first command sent by the network device; wherein the first command is a layer 1 command or a layer 2 command;
performing cell management according to the first command;
where the cell management includes at least one of the following:
   cell handover;
   primary service cell change;
   primary service cell addition;
   PSCell change;
   PSCell addition;
   Secondary Cell (Scell) change;
   Scell addition.

In FIG. 4, a bus architecture may include any number of interconnected bus and bridge. Specifically, various circuits of one or more processors, which are represented by the processor 43, and one or more memories, which are represented by the memory 41, are linked together. The bus architecture may link various other circuits, such as a peripheral device, voltage regulator and a power management circuit together. These features are well known in this field; therefore, this disclosure does not make further description on these features. The bus interface provides an interface. The transceiver 42 may be multiple elements, including a transmitter and a receiver and provide units, which communicate with other devices on the transmission medium. For different UEs, a user interface 44 may be an interface that can be connected to external or internal devices. The connected devices include but are not limited to a small keyboard, a display, a speaker, a microphone, a joystick, etc.

The processor 43 is responsible for managing the bus architecture and the normal processing. The memory 41 may be used to store data used by the processor 43 for performing operations.

The processor 43 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any of the methods provided by the embodiments of the present disclosure according to obtained executable instructions. The processor and the memory may also be arranged physically separately.

It is to be noted that the foregoing device provided in the embodiments of the present disclosure can perform all the method steps performed in the foregoing measurement reporting method embodiments on the UE, and can achieve the same technical effect. The parts and beneficial effects in this embodiment that are the same as those in the method embodiment will not be described in detail here.

As shown in FIG. 5, one embodiment of the present disclosure provides a network device 500, including:
a receiving unit 510 used to receive a layer 1 measurement result sent by a user equipment (UE); where the layer 1 measurement result meets a preset condition, and the preset condition includes a trigger condition of event trigger configuration information.

Optionally, the event trigger configuration information is configured by the network device or predefined by a protocol.

Optionally, the network device 500 further includes:
a first sending unit used to send layer 1 measurement configuration information to the UE;
where the layer 1 measurement configuration information carries the event trigger configuration information; or the layer 1 measurement configuration information is associated with first measurement reporting identifier information or first measurement identifier information, and the first measurement reporting identifier information or first measurement identifier information is associated with the event trigger configuration information.

Optionally, the network device 500 further includes:
a second sending unit used to send an RRC message and/or MAC CE to the UE; wherein the RRC message and/or MAC CE carries the event trigger configuration information.

Optionally, the event trigger configuration information includes at least one of the following:
beam identifier;
measurement reporting identifier;
reference signal resource configuration identifier;
a cell identifier of a cell associated with the beam identifier;
frequency information of a cell associated with the beam identifier;
TCI identifier associated with the beam identifier;
beam measurement parameter;
RRM measurement parameter;
resource configuration information of resources corresponding to reported layer 1 measurement result;
measurement configuration information for RRM measurement;
first indication information used to indicate that RRM measurement is determined based on layer 3 measurement configuration information;
second indication information used to indicate that the RRM measurement is determined based on a measurement object identifier of layer 3 measurement configuration information;
a first threshold of the RRM measurement value;
a first fluctuation threshold of an RRM measurement value;
third indication information used to indicate a reference signal type to which the first threshold and/or the first fluctuation threshold is applicable;
fourth indication information used to indicate a measurement parameter corresponding to the first threshold and/or the first fluctuation threshold;
a first duration of the first threshold or the first fluctuation threshold;
a cell number N1 for reporting RRM measurements, where N1 is a positive integer;
fifth indication information used to indicate that the UE can only report a measurement result of a cell with the largest number of beams whose RRM measurement value is greater than the second threshold, or to indicate that the UE can only report measurement results of N2 cells with the largest number of beams whose RRM measurement value is greater than the second threshold, where N2 is a positive integer;
a third threshold of the layer 1 beam measurement value;
a second fluctuation threshold of the layer 1 beam measurement value;
sixth indication information used to indicate a reference signal type to which the third threshold or the second fluctuation threshold is applicable;
seventh indication information used to indicate a measurement parameter corresponding to the third threshold or the second fluctuation threshold;
a second duration of the third threshold or the second fluctuation threshold;
a beam number N3 for reporting layer 1 beam measurements, N3 is a positive integer.

Optionally, the RRM measurement value includes at least one of the following:
measurement value after layer 1 filtering and beam averaging;
measurement value after layer 1 filtering and layer 3 beam filtering;
measurement value after layer 1 filtering, beam averaging and layer 3 cell filtering.

Optionally, the layer 1 beam measurement value includes at least one of the following:
beam measurement value after only layer 1 filtering;
measurement value after layer 1 filtering and beam measurement number averaging.

Optionally, the trigger condition of the event trigger configuration information includes at least one of the following:
a measurement value of the RRM measurement is greater than the first threshold;
a measurement value of the RRM measurement is always greater than the first threshold within the first duration;
a measurement value of the RRM measurement is greater than a measurement result of a serving cell;
a measurement value of an RRM measurement is always greater than a measurement result of a serving cell within the first duration;
a measurement value of the RRM measurement belongs to measurement values of the first (N1+1) RRM measurements after measurement values of all RRM measurements are sorted by the measurement values;
a measurement value of an RRM measurement belong to measurement values of the first (N1+1) RRM measurements after measurement values of all RRM measurements are sorted by the measurement values within the first duration;
a measurement value of an RRM measurement is a beam measurement value of a first cell, and the first cell is a cell with the largest number of beams greater than the second threshold;
a measurement value of the RRM measurement is a beam measurement value of a second cell, and the second cell is a cell whose number of beams greater than the second threshold ranks in the top N2+1;
a change amount of the measurement value of the RRM measurement is less than the first fluctuation threshold;
a change amount of the measurement value of the RRM measurement is always less than the first fluctuation threshold within the first duration;
a measurement value of the layer 1 beam measurement is greater than the third threshold;
a measurement value of the layer 1 beam measurement is always greater than the third threshold within the second duration;
a measurement value of the layer 1 beam measurement is the best among all the measurement values of the layer 1 beam measurement;
a measurement value of the layer 1 beam measurement is optimal among all the measurement values of the layer 1 beam measurement within the second duration;
a measurement value of the layer 1 beam measurement belongs to the first (N3+1) layer 1 beam measurement values among all layer 1 beam measurement values sorted by measurement values;
a measurement value of the layer 1 beam measurement belongs to the first (N3+1) layer 1 beam measurement values among all layer 1 beam measurement values sorted by measurement values, within the second duration;
a change amount of the measurement value of the layer 1 beam measurement is less than the second fluctuation threshold;
measurement values of the layer 1 beam measurement are all less than the second fluctuation threshold within the second duration.

Optionally, the layer 1 measurement result is carried by at least one of the following:
PUSCH;
PUCCH;
MAC CE.

Optionally, the layer 1 measurement result includes at least one of the following:
beam identifier;
eighth indication information used to indicate that the layer 1 measurement result meets the trigger condition of the event trigger configuration information;
TCI identifier;
resource set identifier;
resource configuration identifier;
layer 1 beam measurement value;
layer 1 beam measurement parameter corresponding to the layer 1 beam measurement value;
RRM measurement value;
RRM measurement parameter corresponding to the RRM measurement value.

Optionally, after receiving, by the network device, the layer 1 measurement result sent by the UE, the method further includes:
sending, by the network device, a first command to the UE according to the layer 1 measurement result; where the first command is used to perform cell management, and the first command is a layer 1 command or a layer 2 command.

The cell management includes at least one of the following:
cell handover;
primary service cell change;
primary service cell addition;
PSCell change;
PSCell addition;
Secondary Cell (Scell) change;
Scell addition.

It is to be noted here that the above network device provided in the embodiment of the present disclosure can implement all the method steps implemented in the measurement reporting method embodiment on the above network device, and can achieve the same technical effect. The parts and beneficial effects that are the same as the method embodiment in this embodiment will not be described in detail here.

In order to better achieve the above purpose, as shown in FIG. 6, one embodiment of the present disclosure provides a measurement reporting device, including a memory 61, a transceiver 62, and a processor 63. The memory 61 is used to store a computer program. The transceiver 62 is used to send and receive data under the control of the processor 63; for example, the transceiver 62 is used to receive and send data under the control of the processor 63. The processor 63 is used to read the computer program in the memory 61 and execute the following operations:
receiving a layer 1 measurement result sent by a user equipment (UE); where the layer 1 measurement result meets a preset condition, and the preset condition includes a trigger condition of event trigger configuration information.

Optionally, the event trigger configuration information is configured by the network device or predefined by a protocol.

Optionally, the processor 63 is used to read the computer program in the memory 61 and perform the following operations:
sending layer 1 measurement configuration information to the UE;
where the layer 1 measurement configuration information carries the event trigger configuration information; or the layer 1 measurement configuration information is associated with first measurement reporting identifier information or first measurement identifier information, and the first measurement reporting identifier information or first measurement identifier information is associated with the event trigger configuration information.

Optionally, the processor 63 is used to read the computer program in the memory 61 and perform the following operations:
sending an RRC message and/or MAC CE to the UE; wherein the RRC message and/or MAC CE carries the event trigger configuration information.

Optionally, the event trigger configuration information includes at least one of the following:
beam identifier;
measurement reporting identifier;
reference signal resource configuration identifier;
a cell identifier of a cell associated with the beam identifier;
frequency information of a cell associated with the beam identifier;
TCI identifier associated with the beam identifier;
beam measurement parameter;
RRM measurement parameter;
resource configuration information of resources corresponding to reported layer 1 measurement result;
measurement configuration information for RRM measurement;
first indication information used to indicate that RRM measurement is determined based on layer 3 measurement configuration information;
second indication information used to indicate that the RRM measurement is determined based on a measurement object identifier of layer 3 measurement configuration information;
a first threshold of the RRM measurement value;
a first fluctuation threshold of an RRM measurement value;
third indication information used to indicate a reference signal type to which the first threshold and/or the first fluctuation threshold is applicable;
fourth indication information used to indicate a measurement parameter corresponding to the first threshold and/or the first fluctuation threshold;
a first duration of the first threshold or the first fluctuation threshold;
a cell number N1 for reporting RRM measurements, where N1 is a positive integer;
fifth indication information used to indicate that the UE can only report a measurement result of a cell with the largest number of beams whose RRM measurement value is greater than the second threshold, or to indicate that the UE can only report measurement results of N2 cells with the largest number of beams whose RRM measurement value is greater than the second threshold, where N2 is a positive integer;
a third threshold of the layer 1 beam measurement value;
a second fluctuation threshold of the layer 1 beam measurement value;
sixth indication information used to indicate a reference signal type to which the third threshold or the second fluctuation threshold is applicable;
seventh indication information used to indicate a measurement parameter corresponding to the third threshold or the second fluctuation threshold;
a second duration of the third threshold or the second fluctuation threshold;
a beam number N3 for reporting layer 1 beam measurements, N3 is a positive integer.

Optionally, the RRM measurement value includes at least one of the following:
measurement value after layer 1 filtering and beam averaging;
measurement value after layer 1 filtering and layer 3 beam filtering;
measurement value after layer 1 filtering, beam averaging and layer 3 cell filtering.

Optionally, the layer 1 beam measurement value includes at least one of the following:
beam measurement value after only layer 1 filtering;
measurement value after layer 1 filtering and beam measurement number averaging.

Optionally, the trigger condition of the event trigger configuration information includes at least one of the following:
a measurement value of the RRM measurement is greater than the first threshold;
a measurement value of the RRM measurement is always greater than the first threshold within the first duration;
a measurement value of the RRM measurement is greater than a measurement result of a serving cell;
a measurement value of an RRM measurement is always greater than a measurement result of a serving cell within the first duration;
a measurement value of the RRM measurement belongs to measurement values of the first (N1+1) RRM measurements after measurement values of all RRM measurements are sorted by the measurement values;
a measurement value of an RRM measurement belong to measurement values of the first (N1+1) RRM measurements after measurement values of all RRM measurements are sorted by the measurement values within the first duration;
a measurement value of an RRM measurement is a beam measurement value of a first cell, and the first cell is a cell with the largest number of beams greater than the second threshold;
a measurement value of the RRM measurement is a beam measurement value of a second cell, and the second cell is a cell whose number of beams greater than the second threshold ranks in the top N2+1;
a change amount of the measurement value of the RRM measurement is less than the first fluctuation threshold;
a change amount of the measurement value of the RRM measurement is always less than the first fluctuation threshold within the first duration;
a measurement value of the layer 1 beam measurement is greater than the third threshold;
a measurement value of the layer 1 beam measurement is always greater than the third threshold within the second duration;
a measurement value of the layer 1 beam measurement is the best among all the measurement values of the layer 1 beam measurement;
a measurement value of the layer 1 beam measurement is optimal among all the measurement values of the layer 1 beam measurement within the second duration;
a measurement value of the layer 1 beam measurement belongs to the first (N3+1) layer 1 beam measurement values among all layer 1 beam measurement values sorted by measurement values;
a measurement value of the layer 1 beam measurement belongs to the first (N3+1) layer 1 beam measurement values among all layer 1 beam measurement values sorted by measurement values, within the second duration;
a change amount of the measurement value of the layer 1 beam measurement is less than the second fluctuation threshold;
measurement values of the layer 1 beam measurement are all less than the second fluctuation threshold within the second duration.

Optionally, the layer 1 measurement result is carried by at least one of the following:
PUSCH;
PUCCH;
MAC CE.

Optionally, the layer 1 measurement result includes at least one of the following:
beam identifier;
eighth indication information used to indicate that the layer 1 measurement result meets the trigger condition of the event trigger configuration information;
TCI identifier;
resource set identifier;
resource configuration identifier;
layer 1 beam measurement value;
layer 1 beam measurement parameter corresponding to the layer 1 beam measurement value;
RRM measurement value;
RRM measurement parameter corresponding to the RRM measurement value.

Optionally, after receiving, by the network device, the layer 1 measurement result sent by the UE, the method further includes:
sending, by the network device, a first command to the UE according to the layer 1 measurement result; where the first command is used to perform cell management, and the first command is a layer 1 command or a layer 2 command.

The cell management includes at least one of the following:
cell handover;
primary service cell change;
primary service cell addition;
PSCell change;
PSCell addition;
Secondary Cell (Scell) change;
Scell addition.

In FIG. 6, a bus architecture may include any number of interconnected bus and bridge. Specifically, various circuits of one or more processors, which are represented by the processor 63, and one or more memories, which are represented by the memory 61, are linked together. The bus architecture may link various other circuits, such as a peripheral device, voltage regulator and a power management circuit together. These features are well known in this field; therefore, this disclosure does not make further description on these features. The bus interface provides an interface. The transceiver 62 may be multiple elements, including a transmitter and a receiver and provide units, which communicate with other devices on the transmission medium. The transmission medium includes radio channels, wired channels, optical cables, etc. The processor 63 is responsible for managing the bus architecture and the normal processing. The memory 61 may be used to store data used by the processor 63 for performing operations.

Optionally, the processor 63 may be a central processing unit (CPU), an application specific integrated circuit (ASIC), a field-programmable gate array (FPGA) or a complex programmable logic device (CPLD). The processor may also adopt multi-core architecture.

It is to be noted here that the above device provided in the embodiment of the present disclosure can implement all the method steps implemented in the above measurement reporting method embodiment on the network device, and can achieve the same technical effect. The parts and beneficial effects of this embodiment that are the same as those in the method embodiment will not be described in detail here.

One embodiment of the present disclosure further provides a processor-readable storage medium. The processor-readable storage medium stores a computer program. The computer program is used to cause the processor to execute the steps of the measurement reporting method on the UE, or, the computer program is used to cause the processor to execute the steps of the above measurement reporting method on the network device, and can achieve the same technical effect. The parts and beneficial effects of this embodiment that are the same as those in the method embodiment will not be described in detail here.

The processor-readable storage medium may be any available medium or data storage device that can be accessed by a processor, including but not limited to magnetic storage (such as floppy disk, hard disk, magnetic tape, magneto-optical disk (MO)), optical storage (such as CD, DVD, BD, HVD), and semiconductor memory (such as ROM, EPROM, EEPROM, non-volatile memory (Nand flash), solid-state drive (SSD)).

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

Those skilled in the art should understand that the embodiments of the present application may be provided as methods, systems, or computer program products. Accordingly, in this application, an entirely hardware embodiment, an entirely software embodiment, or an embodiment combining software and hardware aspects may be adopted. Further, the present disclosure may adopt the form of a computer program product implemented on one or more computer available storage media (including but not limited to disk memory and optical memory) including computer available program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These processor-executable instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These processor-executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

In addition, it is to be pointed out that in the device and method of the present disclosure, it is obvious that each component or each step can be decomposed and/or recombined. The decomposition and/or recombination should be regarded as equivalent schemes of the present disclosure. Moreover, the steps of performing the above series of processing can naturally be performed in chronological order according to the order of description, but it is not necessary to perform them in chronological order, and some steps can be performed in parallel or independently of each other. For those of ordinary skill in the art, it is understandable that all or any steps or components of the method and device of the present disclosure can be implemented in hardware, firmware, software or a combination thereof in any computing device (including processors, storage media, etc.) or a network of computing devices, which can be achieved by those of ordinary skill in the art using their basic programming skills after reading the description of the present disclosure.

Obviously, those skilled in the art can make various changes and modifications to the present disclosure without departing from the spirit and scope of the present disclosure. Thus, if these modifications and variations of the present disclosure fall within the scope of the claims of the present disclosure and equivalent technologies thereof, the present disclosure also intends to include these modifications and variations.

## Claims

1. A measurement reporting method, comprising:
obtaining, at a user equipment (UE), a layer 1 measurement result;
if the layer 1 measurement result meets a preset condition, sending, by the UE, the layer 1 measurement result to the network device; wherein the preset condition includes a trigger condition of event trigger configuration information.

2. The method according to claim 1, wherein the event trigger configuration information is configured by the network device or predefined by a protocol.

3. The method according to claim 1 or 2, wherein the method further includes:
receiving, by the UE, layer 1 measurement configuration information sent by the network device;
wherein the layer 1 measurement configuration information carries the event trigger configuration information; or the layer 1 measurement configuration information is associated with first measurement reporting identifier information or first measurement identifier information, and the first measurement reporting identifier information or first measurement identifier information is associated with the event trigger configuration information.

4. The method according to claim 1 or 2, wherein the method further includes:
receiving, by the UE, an RRC message and/or MAC CE sent by the network device; wherein the RRC message and/or MAC CE carries the event trigger configuration information.

5. The method according to claim 1, wherein the event trigger configuration information includes at least one of the following:
beam identifier;
measurement reporting identifier;
reference signal resource configuration identifier;
a cell identifier of a cell associated with the beam identifier;
frequency information of a cell associated with the beam identifier;
TCI identifier associated with the beam identifier;
beam measurement parameter;
RRM measurement parameter;
resource configuration information of resources corresponding to reported layer 1 measurement result;
measurement configuration information for RRM measurement;
first indication information used to indicate that RRM measurement is determined based on layer 3 measurement configuration information;
second indication information used to indicate that the RRM measurement is determined based on a measurement object identifier of layer 3 measurement configuration information;
a first threshold of the RRM measurement value;
a first fluctuation threshold of an RRM measurement value;
third indication information used to indicate a reference signal type to which the first threshold and/or the first fluctuation threshold is applicable;
fourth indication information used to indicate a measurement parameter corresponding to the first threshold and/or the first fluctuation threshold;
a first duration of the first threshold or the first fluctuation threshold;
a cell number N1 for reporting RRM measurements, where N1 is a positive integer;
fifth indication information used to indicate that the UE can only report a measurement result of a cell with the largest number of beams whose RRM measurement value is greater than the second threshold, or to indicate that the UE can only report measurement results of N2 cells with the largest number of beams whose RRM measurement value is greater than the second threshold, where N2 is a positive integer;
a third threshold of the layer 1 beam measurement value;
a second fluctuation threshold of the layer 1 beam measurement value;
sixth indication information used to indicate a reference signal type to which the third threshold or the second fluctuation threshold is applicable;
seventh indication information used to indicate a measurement parameter corresponding to the third threshold or the second fluctuation threshold;
a second duration of the third threshold or the second fluctuation threshold;
a beam number N3 for reporting layer 1 beam measurements, N3 is a positive integer.

6. The method according to claim 5, wherein the RRM measurement value includes at least one of the following:
measurement value after layer 1 filtering and beam averaging;
measurement value after layer 1 filtering and layer 3 beam filtering;
measurement value after layer 1 filtering, beam averaging and layer 3 cell filtering.

7. The method according to claim 5, wherein the layer 1 beam measurement value includes at least one of the following:
beam measurement value after only layer 1 filtering;
measurement value after layer 1 filtering and beam measurement number averaging.

8. The method according to claim 5, wherein the trigger condition of the event trigger configuration information includes at least one of the following:
a measurement value of the RRM measurement is greater than the first threshold;
a measurement value of the RRM measurement is always greater than the first threshold within the first duration;
a measurement value of the RRM measurement is greater than a measurement result of a serving cell;
a measurement value of an RRM measurement is always greater than a measurement result of a serving cell within the first duration;
a measurement value of the RRM measurement belongs to measurement values of the first (N1+1) RRM measurements after measurement values of all RRM measurements are sorted by the measurement values;
a measurement value of an RRM measurement belong to measurement values of the first (N1+1) RRM measurements after measurement values of all RRM measurements are sorted by the measurement values within the first duration;
a measurement value of an RRM measurement is a beam measurement value of a first cell, and the first cell is a cell with the largest number of beams greater than the second threshold;
a measurement value of the RRM measurement is a beam measurement value of a second cell, and the second cell is a cell whose number of beams greater than the second threshold ranks in the top N2+1;
a change amount of the measurement value of the RRM measurement is less than the first fluctuation threshold;
a change amount of the measurement value of the RRM measurement is always less than the first fluctuation threshold within the first duration;
a measurement value of the layer 1 beam measurement is greater than the third threshold;
a measurement value of the layer 1 beam measurement is always greater than the third threshold within the second duration;
a measurement value of the layer 1 beam measurement is the best among all the measurement values of the layer 1 beam measurement;
a measurement value of the layer 1 beam measurement is optimal among all the measurement values of the layer 1 beam measurement within the second duration;
a measurement value of the layer 1 beam measurement belongs to the first (N3+1) layer 1 beam measurement values among all layer 1 beam measurement values sorted by measurement values;
a measurement value of the layer 1 beam measurement belongs to the first (N3+1) layer 1 beam measurement values among all layer 1 beam measurement values sorted by measurement values, within the second duration;
a change amount of the measurement value of the layer 1 beam measurement is less than the second fluctuation threshold;
measurement values of the layer 1 beam measurement are all less than the second fluctuation threshold within the second duration.

9. The method according to claim 1, wherein the layer 1 measurement result is carried by at least one of the following:
PUSCH;
PUCCH;
MAC CE.

10. The method according to claim 1, wherein the layer 1 measurement result includes at least one of the following:
beam identifier;
eighth indication information used to indicate that the layer 1 measurement result meets the trigger condition of the event trigger configuration information;
TCI identifier;
resource set identifier;
resource configuration identifier;
layer 1 beam measurement value;
layer 1 beam measurement parameter corresponding to the layer 1 beam measurement value;
RRM measurement value;
RRM measurement parameter corresponding to the RRM measurement value.

11. The method according to claim 1, wherein after sending, by the UE, the layer 1 measurement result, to the network device, the method further includes:
receiving, by the UE, a first command sent by the network device; where the first command is a layer 1 command or a layer 2 command;
performing, by the UE, cell management according to the first command; wherein the cell management includes at least one of the following:
cell handover;
primary service cell change;
primary service cell addition;
PSCell change;
PSCell addition;
Secondary Cell (Scell) change;
Scell addition.

12. A measurement reporting method, comprising:
receiving, by a network device, a layer 1 measurement result sent by a user equipment (UE); wherein the layer 1 measurement result meets a preset condition, and the preset condition includes a trigger condition of event trigger configuration information.

13. The method according to claim 12, wherein the event trigger configuration information is configured by the network device or predefined by a protocol.

14. The method according to claim 12 or 13, wherein the method further includes:
sending layer 1 measurement configuration information to the UE;
wherein the layer 1 measurement configuration information carries the event trigger configuration information; or the layer 1 measurement configuration information is associated with first measurement reporting identifier information or first measurement identifier information, and the first measurement reporting identifier information or first measurement identifier information is associated with the event trigger configuration information.

15. The method according to claim 12 or 13, wherein the method further includes:
sending an RRC message and/or MAC CE to the UE; wherein the RRC message and/or MAC CE carries the event trigger configuration information.

16. The method according to claim 12, wherein the event trigger configuration information includes at least one of the following:
beam identifier;
measurement reporting identifier;
reference signal resource configuration identifier;
a cell identifier of a cell associated with the beam identifier;
frequency information of a cell associated with the beam identifier;
TCI identifier associated with the beam identifier;
beam measurement parameter;
RRM measurement parameter;
resource configuration information of resources corresponding to reported layer 1 measurement result;
measurement configuration information for RRM measurement;
first indication information used to indicate that RRM measurement is determined based on layer 3 measurement configuration information;
second indication information used to indicate that the RRM measurement is determined based on a measurement object identifier of layer 3 measurement configuration information;
a first threshold of the RRM measurement value;
a first fluctuation threshold of an RRM measurement value;
third indication information used to indicate a reference signal type to which the first threshold and/or the first fluctuation threshold is applicable;
fourth indication information used to indicate a measurement parameter corresponding to the first threshold and/or the first fluctuation threshold;
a first duration of the first threshold or the first fluctuation threshold;
a cell number N1 for reporting RRM measurements, where N1 is a positive integer;
fifth indication information used to indicate that the UE can only report a measurement result of a cell with the largest number of beams whose RRM measurement value is greater than the second threshold, or to indicate that the UE can only report measurement results of N2 cells with the largest number of beams whose RRM measurement value is greater than the second threshold, where N2 is a positive integer;
a third threshold of the layer 1 beam measurement value;
a second fluctuation threshold of the layer 1 beam measurement value;
sixth indication information used to indicate a reference signal type to which the third threshold or the second fluctuation threshold is applicable;
seventh indication information used to indicate a measurement parameter corresponding to the third threshold or the second fluctuation threshold;
a second duration of the third threshold or the second fluctuation threshold;
a beam number N3 for reporting layer 1 beam measurements, N3 is a positive integer.

17. The method according to claim 16, wherein the RRM measurement value of the RRM measurement parameter includes at least one of the following:
measurement value after layer 1 filtering and beam averaging;
measurement value after layer 1 filtering and layer 3 beam filtering;
measurement value after layer 1 filtering, beam averaging and layer 3 cell filtering.

18. The method according to claim 16, wherein the layer 1 beam measurement value of the layer 1 beam measurement parameter includes at least one of the following:
beam measurement value after only layer 1 filtering;
measurement value after layer 1 filtering and beam measurement number averaging.

19. The method according to claim 16, wherein the trigger condition of the event trigger configuration information includes at least one of the following:
a measurement value of the RRM measurement is greater than the first threshold;
a measurement value of the RRM measurement is always greater than the first threshold within the first duration;
a measurement value of the RRM measurement is greater than a measurement result of a serving cell;
a measurement value of an RRM measurement is always greater than a measurement result of a serving cell within the first duration;
a measurement value of the RRM measurement belongs to measurement values of the first (N1+1) RRM measurements after measurement values of all RRM measurements are sorted by the measurement values;
a measurement value of an RRM measurement belong to measurement values of the first (N1+1) RRM measurements after measurement values of all RRM measurements are sorted by the measurement values within the first duration;
a measurement value of an RRM measurement is a beam measurement value of a first cell, and the first cell is a cell with the largest number of beams greater than the second threshold;
a measurement value of the RRM measurement is a beam measurement value of a second cell, and the second cell is a cell whose number of beams greater than the second threshold ranks in the top N2+1;
a change amount of the measurement value of the RRM measurement is less than the first fluctuation threshold;
a change amount of the measurement value of the RRM measurement is always less than the first fluctuation threshold within the first duration;
a measurement value of the layer 1 beam measurement is greater than the third threshold;
a measurement value of the layer 1 beam measurement is always greater than the third threshold within the second duration;
a measurement value of the layer 1 beam measurement is the best among all the measurement values of the layer 1 beam measurement;
a measurement value of the layer 1 beam measurement is optimal among all the measurement values of the layer 1 beam measurement within the second duration;
a measurement value of the layer 1 beam measurement belongs to the first (N3+1) layer 1 beam measurement values among all layer 1 beam measurement values sorted by measurement values;
a measurement value of the layer 1 beam measurement belongs to the first (N3+1) layer 1 beam measurement values among all layer 1 beam measurement values sorted by measurement values, within the second duration;
a change amount of the measurement value of the layer 1 beam measurement is less than the second fluctuation threshold;
measurement values of the layer 1 beam measurement are all less than the second fluctuation threshold within the second duration.

20. The method according to claim 12, wherein the layer 1 measurement result is carried by at least one of the following:
PUSCH;
PUCCH;
MAC CE.

21. The method according to claim 12, wherein the layer 1 measurement result includes at least one of the following:
beam identifier;
eighth indication information used to indicate that the layer 1 measurement result meets the trigger condition of the event trigger configuration information;
TCI identifier;
resource set identifier;
resource configuration identifier;
layer 1 beam measurement value;
layer 1 beam measurement parameter corresponding to the layer 1 beam measurement value;
RRM measurement value;
RRM measurement parameter corresponding to the RRM measurement value.

22. The method according to claim 12, wherein after receiving, by the network device, the layer 1 measurement result sent by the UE, the method further includes:
sending, by the network device, a first command to the UE according to the layer 1 measurement result; wherein the first command is used to perform cell management, and the first command is a layer 1 command or a layer 2 command;
wherein the cell management includes at least one of the following:
cell handover;
primary service cell change;
primary service cell addition;
PSCell change;
PSCell addition;
Secondary Cell (Scell) change;
Scell addition.

23. A measurement reporting device, comprising: a memory, a transceiver, and a processor;
wherein the memory is used to store a computer program; the transceiver is used to send and receive data under the control of the processor; the processor is used to read the computer program in the memory and perform the following operations:
obtaining, at a user equipment (UE), a layer 1 measurement result;
if the layer 1 measurement result meets a preset condition, sending, by the UE, the layer 1 measurement result to the network device; wherein the preset condition includes a trigger condition of event trigger configuration information.

24. The device according to claim 23, wherein the event trigger configuration information is configured by the network device or predefined by a protocol.

25. The device according to claim 23 or 24, wherein the processor is used to read the computer program in the memory and perform the following operations:
receiving layer 1 measurement configuration information sent by the network device;
wherein the layer 1 measurement configuration information carries the event trigger configuration information; or the layer 1 measurement configuration information is associated with first measurement reporting identifier information or first measurement identifier information, and the first measurement reporting identifier information or first measurement identifier information is associated with the event trigger configuration information.

26. The device according to claim 23 or 24, wherein the processor is used to read the computer program in the memory and perform the following operations:
receiving an RRC message and/or MAC CE sent by the network device; wherein the RRC message and/or MAC CE carries the event trigger configuration information.

27. The device according to claim 23, wherein the event trigger configuration information includes at least one of the following:
beam identifier;
measurement reporting identifier;
reference signal resource configuration identifier;
a cell identifier of a cell associated with the beam identifier;
frequency information of a cell associated with the beam identifier;
TCI identifier associated with the beam identifier;
beam measurement parameter;
RRM measurement parameter;
resource configuration information of resources corresponding to reported layer 1 measurement result;
measurement configuration information for RRM measurement;
first indication information used to indicate that RRM measurement is determined based on layer 3 measurement configuration information;
second indication information used to indicate that the RRM measurement is determined based on a measurement object identifier of layer 3 measurement configuration information;
a first threshold of the RRM measurement value;
a first fluctuation threshold of an RRM measurement value;
third indication information used to indicate a reference signal type to which the first threshold and/or the first fluctuation threshold is applicable;
fourth indication information used to indicate a measurement parameter corresponding to the first threshold and/or the first fluctuation threshold;
a first duration of the first threshold or the first fluctuation threshold;
a cell number N1 for reporting RRM measurements, where N1 is a positive integer;
fifth indication information used to indicate that the UE can only report a measurement result of a cell with the largest number of beams whose RRM measurement value is greater than the second threshold, or to indicate that the UE can only report measurement results of N2 cells with the largest number of beams whose RRM measurement value is greater than the second threshold, where N2 is a positive integer;
a third threshold of the layer 1 beam measurement value;
a second fluctuation threshold of the layer 1 beam measurement value;
sixth indication information used to indicate a reference signal type to which the third threshold or the second fluctuation threshold is applicable;
seventh indication information used to indicate a measurement parameter corresponding to the third threshold or the second fluctuation threshold;
a second duration of the third threshold or the second fluctuation threshold;
a beam number N3 for reporting layer 1 beam measurements, N3 is a positive integer.

28. The device according to claim 27, wherein the trigger condition of the event trigger configuration information includes at least one of the following:
a measurement value of the RRM measurement is greater than the first threshold;
a measurement value of the RRM measurement is always greater than the first threshold within the first duration;
a measurement value of the RRM measurement is greater than a measurement result of a serving cell;
a measurement value of an RRM measurement is always greater than a measurement result of a serving cell within the first duration;
a measurement value of the RRM measurement belongs to measurement values of the first (N1+1) RRM measurements after measurement values of all RRM measurements are sorted by the measurement values;
a measurement value of an RRM measurement belong to measurement values of the first (N1+1) RRM measurements after measurement values of all RRM measurements are sorted by the measurement values within the first duration;
a measurement value of an RRM measurement is a beam measurement value of a first cell, and the first cell is a cell with the largest number of beams greater than the second threshold;
a measurement value of the RRM measurement is a beam measurement value of a second cell, and the second cell is a cell whose number of beams greater than the second threshold ranks in the top N2+1;
a change amount of the measurement value of the RRM measurement is less than the first fluctuation threshold;
a change amount of the measurement value of the RRM measurement is always less than the first fluctuation threshold within the first duration;
a measurement value of the layer 1 beam measurement is greater than the third threshold;
a measurement value of the layer 1 beam measurement is always greater than the third threshold within the second duration;
a measurement value of the layer 1 beam measurement is the best among all the measurement values of the layer 1 beam measurement;
a measurement value of the layer 1 beam measurement is optimal among all the measurement values of the layer 1 beam measurement within the second duration;
a measurement value of the layer 1 beam measurement belongs to the first (N3+1) layer 1 beam measurement values among all layer 1 beam measurement values sorted by measurement values;
a measurement value of the layer 1 beam measurement belongs to the first (N3+1) layer 1 beam measurement values among all layer 1 beam measurement values sorted by measurement values, within the second duration;
a change amount of the measurement value of the layer 1 beam measurement is less than the second fluctuation threshold;
measurement values of the layer 1 beam measurement are all less than the second fluctuation threshold within the second duration.

29. The device according to claim 23, wherein the layer 1 measurement result includes at least one of the following:
beam identifier;
eighth indication information used to indicate that the layer 1 measurement result meets the trigger condition of the event trigger configuration information;
TCI identifier;
resource set identifier;
resource configuration identifier;
layer 1 beam measurement value;
layer 1 beam measurement parameter corresponding to the layer 1 beam measurement value;
RRM measurement value;
RRM measurement parameter corresponding to the RRM measurement value.

30. A user equipment (UE), comprising:
an obtaining unit used to obtain a layer 1 measurement result;
a sending unit used to, if the layer 1 measurement result meets a preset condition, send the layer 1 measurement result to the network device; wherein the preset condition includes a trigger condition of event trigger configuration information.

31. The UE according to claim 30, wherein the event trigger configuration information is configured by the network device or predefined by a protocol.

32. The UE according to claim 30 or 31, wherein the UE further includes:
a first receiving unit used to receive layer 1 measurement configuration information sent by the network device;
wherein the layer 1 measurement configuration information carries the event trigger configuration information; or the layer 1 measurement configuration information is associated with first measurement reporting identifier information or first measurement identifier information, and the first measurement reporting identifier information or first measurement identifier information is associated with the event trigger configuration information.

33. The UE according to claim 30 or 31, wherein the UE further includes:
a second receiving unit used to receive an RRC message and/or MAC CE sent by the network device; wherein the RRC message and/or MAC CE carries the event trigger configuration information.

34. The UE according to claim 30, wherein the event trigger configuration information includes at least one of the following:
beam identifier;
measurement reporting identifier;
reference signal resource configuration identifier;
a cell identifier of a cell associated with the beam identifier;
frequency information of a cell associated with the beam identifier;
TCI identifier associated with the beam identifier;
beam measurement parameter;
RRM measurement parameter;
resource configuration information of resources corresponding to reported layer 1 measurement result;
measurement configuration information for RRM measurement;
first indication information used to indicate that RRM measurement is determined based on layer 3 measurement configuration information;
second indication information used to indicate that the RRM measurement is determined based on a measurement object identifier of layer 3 measurement configuration information;
a first threshold of the RRM measurement value;
a first fluctuation threshold of an RRM measurement value;
third indication information used to indicate a reference signal type to which the first threshold and/or the first fluctuation threshold is applicable;
fourth indication information used to indicate a measurement parameter corresponding to the first threshold and/or the first fluctuation threshold;
a first duration of the first threshold or the first fluctuation threshold;
a cell number N1 for reporting RRM measurements, where N1 is a positive integer;
fifth indication information used to indicate that the UE can only report a measurement result of a cell with the largest number of beams whose RRM measurement value is greater than the second threshold, or to indicate that the UE can only report measurement results of N2 cells with the largest number of beams whose RRM measurement value is greater than the second threshold, where N2 is a positive integer;
a third threshold of the layer 1 beam measurement value;
a second fluctuation threshold of the layer 1 beam measurement value;
sixth indication information used to indicate a reference signal type to which the third threshold or the second fluctuation threshold is applicable;
seventh indication information used to indicate a measurement parameter corresponding to the third threshold or the second fluctuation threshold;
a second duration of the third threshold or the second fluctuation threshold;
a beam number N3 for reporting layer 1 beam measurements, N3 is a positive integer.

35. The UE according to claim 34, wherein the trigger condition of the event trigger configuration information includes at least one of the following:
a measurement value of the RRM measurement is greater than the first threshold;
a measurement value of the RRM measurement is always greater than the first threshold within the first duration;
a measurement value of the RRM measurement is greater than a measurement result of a serving cell;
a measurement value of an RRM measurement is always greater than a measurement result of a serving cell within the first duration;
a measurement value of the RRM measurement belongs to measurement values of the first (N1+1) RRM measurements after measurement values of all RRM measurements are sorted by the measurement values;
a measurement value of an RRM measurement belong to measurement values of the first (N1+1) RRM measurements after measurement values of all RRM measurements are sorted by the measurement values within the first duration;
a measurement value of an RRM measurement is a beam measurement value of a first cell, and the first cell is a cell with the largest number of beams greater than the second threshold;
a measurement value of the RRM measurement is a beam measurement value of a second cell, and the second cell is a cell whose number of beams greater than the second threshold ranks in the top N2+1;
a change amount of the measurement value of the RRM measurement is less than the first fluctuation threshold;
a change amount of the measurement value of the RRM measurement is always less than the first fluctuation threshold within the first duration;
a measurement value of the layer 1 beam measurement is greater than the third threshold;
a measurement value of the layer 1 beam measurement is always greater than the third threshold within the second duration;
a measurement value of the layer 1 beam measurement is the best among all the measurement values of the layer 1 beam measurement;
a measurement value of the layer 1 beam measurement is optimal among all the measurement values of the layer 1 beam measurement within the second duration;
a measurement value of the layer 1 beam measurement belongs to the first (N3+1) layer 1 beam measurement values among all layer 1 beam measurement values sorted by measurement values;
a measurement value of the layer 1 beam measurement belongs to the first (N3+1) layer 1 beam measurement values among all layer 1 beam measurement values sorted by measurement values, within the second duration;
a change amount of the measurement value of the layer 1 beam measurement is less than the second fluctuation threshold;
measurement values of the layer 1 beam measurement are all less than the second fluctuation threshold within the second duration.

36. The UE according to claim 30, wherein the layer 1 measurement result includes at least one of the following:
beam identifier;
eighth indication information used to indicate that the layer 1 measurement result meets the trigger condition of the event trigger configuration information;
TCI identifier;
resource set identifier;
resource configuration identifier;
layer 1 beam measurement value;
layer 1 beam measurement parameter corresponding to the layer 1 beam measurement value;
RRM measurement value;
RRM measurement parameter corresponding to the RRM measurement value.

37. A measurement reporting device, comprising: a memory, a transceiver, and a processor;
wherein the memory is used to store a computer program; the transceiver is used to send and receive data under the control of the processor; the processor is used to read the computer program in the memory and perform the following operations:
receiving a layer 1 measurement result sent by a user equipment (UE); wherein the layer 1 measurement result meets a preset condition, and the preset condition includes a trigger condition of event trigger configuration information.

38. The device according to claim 37, wherein the event trigger configuration information is configured by the network device or predefined by a protocol.

39. The device according to claim 37 or 38, wherein the processor is used to read the computer program in the memory and perform the following operations:
sending layer 1 measurement configuration information to the UE;
wherein the layer 1 measurement configuration information carries the event trigger configuration information; or the layer 1 measurement configuration information is associated with first measurement reporting identifier information or first measurement identifier information, and the first measurement reporting identifier information or first measurement identifier information is associated with the event trigger configuration information.

40. The device according to claim 37 or 38, wherein the processor is used to read the computer program in the memory and perform the following operations:
sending an RRC message and/or MAC CE to the UE; wherein the RRC message and/or MAC CE carries the event trigger configuration information.

41. The device according to claim 37, wherein the event trigger configuration information includes at least one of the following:
beam identifier;
measurement reporting identifier;
reference signal resource configuration identifier;
a cell identifier of a cell associated with the beam identifier;
frequency information of a cell associated with the beam identifier;
TCI identifier associated with the beam identifier;
beam measurement parameter;
RRM measurement parameter;
resource configuration information of resources corresponding to reported layer 1 measurement result;
measurement configuration information for RRM measurement;
first indication information used to indicate that RRM measurement is determined based on layer 3 measurement configuration information;
second indication information used to indicate that the RRM measurement is determined based on a measurement object identifier of layer 3 measurement configuration information;
a first threshold of the RRM measurement value;
a first fluctuation threshold of an RRM measurement value;
third indication information used to indicate a reference signal type to which the first threshold and/or the first fluctuation threshold is applicable;
fourth indication information used to indicate a measurement parameter corresponding to the first threshold and/or the first fluctuation threshold;
a first duration of the first threshold or the first fluctuation threshold;
a cell number N1 for reporting RRM measurements, where N1 is a positive integer;
fifth indication information used to indicate that the UE can only report a measurement result of a cell with the largest number of beams whose RRM measurement value is greater than the second threshold, or to indicate that the UE can only report measurement results of N2 cells with the largest number of beams whose RRM measurement value is greater than the second threshold, where N2 is a positive integer;
a third threshold of the layer 1 beam measurement value;
a second fluctuation threshold of the layer 1 beam measurement value;
sixth indication information used to indicate a reference signal type to which the third threshold or the second fluctuation threshold is applicable;
seventh indication information used to indicate a measurement parameter corresponding to the third threshold or the second fluctuation threshold;
a second duration of the third threshold or the second fluctuation threshold;
a beam number N3 for reporting layer 1 beam measurements, N3 is a positive integer.

42. The device according to claim 41, wherein the trigger condition of the event trigger configuration information includes at least one of the following:
a measurement value of the RRM measurement is greater than the first threshold;
a measurement value of the RRM measurement is always greater than the first threshold within the first duration;
a measurement value of the RRM measurement is greater than a measurement result of a serving cell;
a measurement value of an RRM measurement is always greater than a measurement result of a serving cell within the first duration;
a measurement value of the RRM measurement belongs to measurement values of the first (N1+1) RRM measurements after measurement values of all RRM measurements are sorted by the measurement values;
a measurement value of an RRM measurement belong to measurement values of the first (N1+1) RRM measurements after measurement values of all RRM measurements are sorted by the measurement values within the first duration;
a measurement value of an RRM measurement is a beam measurement value of a first cell, and the first cell is a cell with the largest number of beams greater than the second threshold;
a measurement value of the RRM measurement is a beam measurement value of a second cell, and the second cell is a cell whose number of beams greater than the second threshold ranks in the top N2+1;
a change amount of the measurement value of the RRM measurement is less than the first fluctuation threshold;
a change amount of the measurement value of the RRM measurement is always less than the first fluctuation threshold within the first duration;
a measurement value of the layer 1 beam measurement is greater than the third threshold;
a measurement value of the layer 1 beam measurement is always greater than the third threshold within the second duration;
a measurement value of the layer 1 beam measurement is the best among all the measurement values of the layer 1 beam measurement;
a measurement value of the layer 1 beam measurement is optimal among all the measurement values of the layer 1 beam measurement within the second duration;
a measurement value of the layer 1 beam measurement belongs to the first (N3+1) layer 1 beam measurement values among all layer 1 beam measurement values sorted by measurement values;
a measurement value of the layer 1 beam measurement belongs to the first (N3+1) layer 1 beam measurement values among all layer 1 beam measurement values sorted by measurement values, within the second duration;
a change amount of the measurement value of the layer 1 beam measurement is less than the second fluctuation threshold;
measurement values of the layer 1 beam measurement are all less than the second fluctuation threshold within the second duration.

43. The device according to claim 37, wherein the layer 1 measurement result includes at least one of the following:
beam identifier;
eighth indication information used to indicate that the layer 1 measurement result meets the trigger condition of the event trigger configuration information;
TCI identifier;
resource set identifier;
resource configuration identifier;
layer 1 beam measurement value;
layer 1 beam measurement parameter corresponding to the layer 1 beam measurement value;
RRM measurement value;
RRM measurement parameter corresponding to the RRM measurement value.

44. A network device, comprising:
a receiving unit used to receive a layer 1 measurement result; wherein the layer 1 measurement result meets a preset condition, and the preset condition includes a trigger condition of event trigger configuration information.

45. The device according to claim 44, wherein the event trigger configuration information is configured by the network device or predefined by a protocol.

46. The device according to claim 44 or 45, wherein the network device further includes:
a first sending unit used to send layer 1 measurement configuration information to the UE;
wherein the layer 1 measurement configuration information carries the event trigger configuration information; or the layer 1 measurement configuration information is associated with first measurement reporting identifier information or first measurement identifier information, and the first measurement reporting identifier information or first measurement identifier information is associated with the event trigger configuration information.

47. The device according to claim 44 or 45, wherein the network device further includes:
a second sending unit used to send an RRC message and/or MAC CE to the UE; wherein the RRC message and/or MAC CE carries the event trigger configuration information.

48. The device according to claim 44, wherein the event trigger configuration information includes at least one of the following:
beam identifier;
measurement reporting identifier;
reference signal resource configuration identifier;
a cell identifier of a cell associated with the beam identifier;
frequency information of a cell associated with the beam identifier;
TCI identifier associated with the beam identifier;
beam measurement parameter;
RRM measurement parameter;
resource configuration information of resources corresponding to reported layer 1 measurement result;
measurement configuration information for RRM measurement;
first indication information used to indicate that RRM measurement is determined based on layer 3 measurement configuration information;
second indication information used to indicate that the RRM measurement is determined based on a measurement object identifier of layer 3 measurement configuration information;
a first threshold of the RRM measurement value;
a first fluctuation threshold of an RRM measurement value;
third indication information used to indicate a reference signal type to which the first threshold and/or the first fluctuation threshold is applicable;
fourth indication information used to indicate a measurement parameter corresponding to the first threshold and/or the first fluctuation threshold;
a first duration of the first threshold or the first fluctuation threshold;
a cell number N1 for reporting RRM measurements, where N1 is a positive integer;
fifth indication information used to indicate that the UE can only report a measurement result of a cell with the largest number of beams whose RRM measurement value is greater than the second threshold, or to indicate that the UE can only report measurement results of N2 cells with the largest number of beams whose RRM measurement value is greater than the second threshold, where N2 is a positive integer;
a third threshold of the layer 1 beam measurement value;
a second fluctuation threshold of the layer 1 beam measurement value;
sixth indication information used to indicate a reference signal type to which the third threshold or the second fluctuation threshold is applicable;
seventh indication information used to indicate a measurement parameter corresponding to the third threshold or the second fluctuation threshold;
a second duration of the third threshold or the second fluctuation threshold;
a beam number N3 for reporting layer 1 beam measurements, N3 is a positive integer.

49. The device according to claim 48, wherein the trigger condition of the event trigger configuration information includes at least one of the following:
a measurement value of the RRM measurement is greater than the first threshold;
a measurement value of the RRM measurement is always greater than the first threshold within the first duration;
a measurement value of the RRM measurement is greater than a measurement result of a serving cell;
a measurement value of an RRM measurement is always greater than a measurement result of a serving cell within the first duration;
a measurement value of the RRM measurement belongs to measurement values of the first (N1+1) RRM measurements after measurement values of all RRM measurements are sorted by the measurement values;
a measurement value of an RRM measurement belong to measurement values of the first (N1+1) RRM measurements after measurement values of all RRM measurements are sorted by the measurement values within the first duration;
a measurement value of an RRM measurement is a beam measurement value of a first cell, and the first cell is a cell with the largest number of beams greater than the second threshold;
a measurement value of the RRM measurement is a beam measurement value of a second cell, and the second cell is a cell whose number of beams greater than the second threshold ranks in the top N2+1;
a change amount of the measurement value of the RRM measurement is less than the first fluctuation threshold;
a change amount of the measurement value of the RRM measurement is always less than the first fluctuation threshold within the first duration;
a measurement value of the layer 1 beam measurement is greater than the third threshold;
a measurement value of the layer 1 beam measurement is always greater than the third threshold within the second duration;
a measurement value of the layer 1 beam measurement is the best among all the measurement values of the layer 1 beam measurement;
a measurement value of the layer 1 beam measurement is optimal among all the measurement values of the layer 1 beam measurement within the second duration;
a measurement value of the layer 1 beam measurement belongs to the first (N3+1) layer 1 beam measurement values among all layer 1 beam measurement values sorted by measurement values;
a measurement value of the layer 1 beam measurement belongs to the first (N3+1) layer 1 beam measurement values among all layer 1 beam measurement values sorted by measurement values, within the second duration;
a change amount of the measurement value of the layer 1 beam measurement is less than the second fluctuation threshold;
measurement values of the layer 1 beam measurement are all less than the second fluctuation threshold within the second duration.

50. The device according to claim 44, wherein the layer 1 measurement result includes at least one of the following:
beam identifier;
eighth indication information used to indicate that the layer 1 measurement result meets the trigger condition of the event trigger configuration information;
TCI identifier;
resource set identifier;
resource configuration identifier;
layer 1 beam measurement value;
layer 1 beam measurement parameter corresponding to the layer 1 beam measurement value;
RRM measurement value;
RRM measurement parameter corresponding to the RRM measurement value.

51. A processor-readable storage medium, comprising a computer program stored thereon; wherein the computer program is used to cause a processor to perform steps of the measurement reporting method according to any one of claims 1 to 11, or the computer program is used to cause the processor to perform the steps of the measurement reporting method according to any one of claims 12 to 22.
